# EUROPEAN PATENT APPLICATION

(11) **EP 2 595 215 A1**
(43) Date of publication of application: **22.05.2013**
(21) Application number: 12193636.3
(22) Date of filing: 21.11.2012
(51) Int. Cl.: H01M 2/10, H01M 10/50

(54) **Battery pack and saddle type vehicle including the same**

(30) Priority: 21.11.2011 JP 2011254428
(71) Applicant: Yamaha Hatsudoki Kabushiki Kaisha, Iwata-shi, Shizuoka 438-8501 (JP)
(72) Inventor: Terada, Junji, Iwata-shi Shizuoka 438-8501 (JP); Iida, Hiroki, Iwata-shi Shizuoka (JP); Itagaki, Takahiro, Iwata-shi Shizuoka 438-8501 (JP); Shima, Yoshinori, Iwata-shi Shizuoka (JP)
(74) Representative: Grünecker, Kinkeldey, Stockmair & Schwanhäusser

(57) **Abstract**

There is provided a battery pack which can be manufactured easily, has an increased amount of heat conducted from the batteries to a case via a battery holding portion. Also, a saddle type vehicle including the battery pack is provided. A battery pack 40 includes case members 54, 56 and a first battery unit 62. The first battery unit 62 has a plurality of batteries 98, a battery holding portion 100 and a plurality of conductor members 120, 122, 124, 126. The batteries 98 are arranged in not less than three (3) rows across an X direction and not less than three (3) columns across a Y direction. The case member 54 has a side wall portion 66, which is fixed to an end surface 110 of the battery holding portion 100, at a plurality of locations in the X direction as well as a plurality of locations in the Y direction. Heat conducted from the batteries 98 to the battery holding portion 100 is then conducted through the end surface 110 of the battery holding portion 100, to the side wall portion 66, and then released.

## Description

### BACKGROUND OF THE INVENTION

### Field of the Invention

The present invention relates to a battery pack, and a saddle type vehicle including the same. More specifically, the present invention relates to a battery pack including a plurality of rechargeable batteries, and a saddle type vehicle including the same.

### Description of the Related Art

Battery packs including a plurality of batteries therein have been proposed. In recent years, there is a requirement for increase in battery capacity in these battery packs, and development efforts are underway for battery packs including a greater number of batteries.

Battery capacity of the battery pack can be increased by increasing the number of batteries. However, this solution poses an issue that it also increases the amount of heat generated in the battery pack. Therefore, improvement in heat releasing performance is an important object in high capacity battery packs. In response, technical development efforts are underway for improved heat releasing performance of the battery packs.

For example, JP-A 2006-134800 discloses a packed battery, which includes a plurality of batteries, conductor plates connected to the batteries, plastic spacers disposed between the batteries, and a plastic case encasing the batteries, the conductor plates and the spacers. Each of the spacers includes a spacer main body and a gap plate formed integrally with the spacer main body. The gap plates fill gaps between a mass of the batteries and side walls of the case by being disposed in gaps between end surfaces of the battery mass and side walls of the case. In such an arrangement as described, heat which is generated in the batteries is conducted to the side walls of the case through the gap plates of the spacers, and then is released from the case.

In the packed battery disclosed in JP-A 2006-134800, the side walls of the case have a draft for injection molding purpose. Due to the draft, the gap between the batteries and the side wall of the case increases at a location closer to an open end of the case. In order to tackle this, the packed battery according to JP-A 2006-134800 includes arrangements in the thickness and the shape of the gap plates for ideal filling of the gaps between the batteries and the side walls of the case by the gap plates. Specifically, the gap plates are made to have an increasing thickness toward the open-end side of the side wall. This makes it possible to increase the amount of heat conducted from the batteries to the side wall of the case via the spacers.

However, in the packed battery according to JP-A 2006-134800, both the case and the gap plates (spacers) are made of plastic, and therefore it is very difficult to increase shape formation accuracy of the case and of the gap plate for making the gap sufficiently small between the batteries and the case. In other words, it is difficult, according to the arrangement disclosed in JP-A 2006-134800, to sufficiently increase the amount of heat conducted from the batteries to the case via the spacers.

### SUMMARY OF THE INVENTION

Therefore, a primary object of the present invention is to provide a battery pack which can be manufactured easily, and can increase the amount of heat conducted from the batteries to the case via a battery holding portion. Another primary obj ect is to provide a saddle type vehicle including the battery pack.

According to an aspect of the present invention, there is provided a battery pack which includes a plurality of rechargeable batteries arranged in a plurality of rows across a first direction and in a plurality of columns across a second direction perpendicular to the first direction; a battery holding portion holding the batteries and having a first end surface and a second end surface spaced from each other in a third direction perpendicular to both the first direction and the second direction; a plurality of conductor members electrically connecting the batteries; and a case encasing the batteries, the battery holding portion and the conductor members. In this battery pack, the batteries are arranged in not less than three rows across the first direction and not less than three columns across the second direction; the case is divided into at least a first case member and a second case member in the third direction; each of the first end surface and the second end surface is across the third direction; the first case member has a first side wall portion opposing to the first end surface; the second case member has a second side wall portion opposing to the second end surface; and the first side wall portion is fixed to the first end surface at a plurality of locations in the first direction and at a plurality of locations in the second direction for receiving heat, which is generated in the batteries and conducted from the batteries to the battery holding portion, from the first end surface.

It should be noted here that the wording "the first end surface is across the third direction" includes not only that the first end surface is perpendicular to the third direction but also that the first end surface is slanted with respect to the third direction. The same applies to the second end surface. Also, the first end surface may have protrusions and/or recesses, and the second end surface may have protrusions and/or recesses.

"A plurality of rechargeable batteries arranged in a plurality of rows across a first direction and in a plurality of columns across a second direction perpendicular to the first direction" includes not only a plurality of batteries arranged in a grid pattern but also those arranged in a staggering (honeycomb) pattern. Therefore, batteries in each column should be placed at least in the first direction but need not be in a straight line. For example, batteries in each column may be placed in a zigzag pattern along the first direction. Also, batteries in each row should be placed at least in the second direction but need not be in a straight line. For example, batteries in each row may be placed in a zigzag pattern along the second direction.

"The first side wall portion is fixed to the first end surface" not only includes a case in which the first side wall portion and the first end surface are in direct contact with each other as the first side wall portion is fixed to the first end surface but also includes cases in which the first side wall portion is fixed to the first end surface with another member (thermally conductive sheet, filler, etc.) sandwiched between the first side wall portion and the first end surface. Therefore, if the first side wall portion is fitted, directly or indirectly, to the first end surface under the state of being fixed to the first end surface, the above-stated condition is satisfied.

In the battery pack according to the present invention, heat generated in a plurality of batteries is first conducted to the first side wall portion of the case via the first end surface of the battery holding portion, and then released. Now, in this battery pack, the first side wall portion of the case is fixed to the first end surface at a plurality of locations in the first direction as well as at a plurality of locations in the second direction. In this case, it is possible to easily make the first side wall portion and the first end surface contact with each other without increasing shape formation accuracy of the case while simultaneously increasing contact between the first side wall portion and the first end surface. This increases the amount of heat which is conducted from the battery holding portion to the case. Especially, improved contact between the first side wall portion and the first end surface helps efficient heat conduction from a center of the battery holding portion where heat tends to accumulate, to the case.

The first end surface and the second end surface of the battery holding portion are each across the third direction. In other words, the first end surface and the second end surface each extend at least in the first direction and in the second direction. In a battery pack in which a plurality of batteries are arranged in a plurality of rows across the first direction and in a plurality of columns across the second direction, the battery holding portion which holds the batteries has increased dimensions in the first direction and in the second direction. Especially in this battery pack, the batteries are arranged in not less than three (3) rows across the first direction and not less than three (3) columns across the second direction, so the battery holding portion has sufficiently increased dimensions in the first direction and in the second direction. In this case, the first end surface and the second end surface which extend in the first direction and the second direction also have sufficiently increased areas. This makes it possible to sufficiently increase the amount of heat which is conducted from the battery holding portion to the first side wall portion of the case via the first end surface. Also, with the increased area of the first end surface, it is easy to improve stiffness of the first side wall portion which is fixed to the first end surface.

Generally, the case of a battery pack is designed as an assembly of two or a greater number of members for ease of manufacture of the battery pack. In the battery pack according to the present invention, the case is divided at least into the first case member and the second case member in the third direction, so it is not necessary to divide the case in the first direction or in the second direction. Therefore, it is not necessary to divide the first side wall portion, which is included in the first case member, in the first direction nor in the second direction. In this case, the first side wall portion can be fixed more easily to the first end surface and further, the first side wall portion has improved heat conductivity than in arrangements where the first side wall portion is divided. Also, it is possible to provide more stable contact of the first side wall portion with the first end surface.

As a result of these, it is possible to manufacture the battery pack easily while it is also possible to increase the amount of heat which is conducted from the batteries to the case via the battery holding portion.

Preferably, the first side wall portion has at least one protrusion protruding toward the battery holding portion, and the protrusion is preferably rectangular when viewed from the third direction.

Preferably, the conductor members are between the first end surface of the battery holding portion and the first side wall portion of the first case member, and the first side wall portion is fixed to the first end surface at a plurality of locations between the conductor members in a view from the third direction. In this case, the first side wall portion is fixed to the first end surface at a plurality of locations between a plurality of conductor members. Therefore, it is possible to prevent a situation where the first side wall portion and the first end surface make mutual contact only at one location. Thus, it is possible to efficiently conduct heat from the battery holding portion to the case.

Further preferably, the first end surface of the battery holding portion includes a protruded surface located on the first side wall portion side with respect to the conductor members and between the conductor members in a view from the third direction. With this arrangement, the first side wall portion is fixed to the first end surface for receiving at least part of heat, which is conducted from the batteries to the battery holding portion, from the protruded surface of the first end surface. In this case, since the first end surface includes the protruded surface, it is easy to make the first end surface and the first side wall portion contact with each other in the protruded surface. With this arrangement, the amount of heat which is conducted from the battery holding portion to the case is easily increased.

Further, preferably, the first side wall portion is fixed to the first end surface at a location adjacent to the protruded surface, within the first end surface. In this case, it is easy to make the first side wall portion contact with the protruded surface. Thus, it is possible to reliably increase the amount of heat which is conducted from the battery holding portion to the case.

Preferably, the first end surface of the battery holding portion includes a flat surface between the conductor members in a view from the third direction; the flat surface has a greater or a smaller width in the first direction than that of the flat surface in the second direction; and the first side wall portion receives at least part of heat, which is conducted from the batteries to the battery holding portion, from the flat surface of the first end surface. In this case, since the first end surface includes the flat surface, it is easy to make the first end surface and the first side wall portion contact with each other in the flat surface. With this arrangement, the amount of heat which is conducted from the battery holding portion to the case is easily increased. It should be noted here that the above-mentioned protruded surface may be provided by the flat surface.

Further preferably, the first side wall portion is fixed to the first end surface at a location adjacent to the flat surface within the first end surface. In this case, it is possible to make the first side wall portion contact with the flat surface more reliably. Thus, it is possible to increase the amount of heat which is conducted from the battery holding portion to the case more reliably.

Further, preferably, the first side wall portion of the case is fixed to the first end surface of the battery holding portion by a plurality of fixing members. In this case, it is possible to easily and reliably fix the first side wall portion to the first end surface with the fixing members.

Preferably, the first side wall portion of the case is fixed to the first end surface of the battery holding portion by welding. In this case, the number of parts in the battery pack is reduced while waterproofing performance of the battery pack is improved.

Further preferably, the battery holding portion is divided into at least a first holding portion and a second holding portion in the third direction, and the first holding portion has the first end surface, whereas the second holding portion has the second end surface. In this case, it is possible, by dividing the battery holding portion at least into the first holding portion and the second holding portion, to hold the batteries in such a fashion that the batteries are sandwiched by the first holding portion and the second holding portion. This makes it possible to simplify the structure of the battery holding portion, making it easy to assemble the battery pack.

Further, preferably, the batteries are arranged in a grid pattern. In this case, it is possible to diffuse heat, which is generated in each of the batteries, efficiently in the battery holding portion. Thus, it is possible to efficiently release the heat which was generated in each of the batteries.

Preferably, the batteries are arranged in a staggering pattern. In this case, it is possible to diffuse heat, which is generated in each of the batteries, efficiently in the battery holding portion. Thus, it is possible to efficiently release the heat which was generated in each of the batteries.

Cost reduction in manufacturing saddle type vehicles which include battery packs requires improved productivity of the battery packs. Also, the saddle type vehicles which include battery packs require improved heat releasing performance of the battery packs. Therefore, the battery pack according to the present invention, which is easily manufactured and has an increased amount of heat conducted from the batteries to the case via the battery holding portion, is suitably applicable to saddle type vehicles.

The above-described objects and other objects, characteristics, aspects and advantages of the present invention will become clearer from the following detailed description of embodiments of the present invention with reference to the attached drawings.

### BRIEF DESCRIPTION OF THE DRAWINGS

Fig. 1 is a side view of a scooter according to an embodiment of the present invention.
Fig. 2 is a side view, showing the scooter with its body cover removed.
Fig. 3 is a perspective view showing an external appearance of a battery pack.
Fig. 4 is a perspective view showing an internal structure of the battery pack.
Fig. 5 is an exploded perspective view of the battery pack.
Fig. 6 is an illustrative sectional view showing a first battery unit.
Fig. 7 is a view of the first battery unit taken from a side wall portion side.
Fig. 8 is a view of a first holding portion of the first battery unit taken from the side wall portion side.
Fig. 9 shows an end surface of a battery holding portion.
Fig. 10 is an illustrative sectional view showing a second battery unit.
Fig. 11 shows a relationship between a case and the first battery unit.
Fig. 12 is a sectional view showing a relationship between the side wall portion, the first holding portion and screws.
Fig. 13 shows a battery unit in which a plurality of batteries are arranged in a staggering pattern.
Fig. 14 shows a battery holding portion.
Fig. 15 is a perspective view showing an internal structure of another example of the battery pack.
Fig. 16 is a perspective view showing a case member and a radiator plate.
Fig. 17 is a sectional view showing a relationship between the first holding portion, a side wall portion of the case member and the radiator plate.

### DETAILED DESCRIPTION OF THE PREFERRED EMBODIMENTS

Hereinafter, embodiments of the present invention will be described with reference to the drawings. The description will cover a case where a battery pack 40 according to an embodiment of the present invention is installed in a scooter 10 as an example of saddle type vehicles. It is noted that the terms front and rear, right and left, up and down as used in describing the scooter 10 are determined from the rider's position on a seat 38 of the scooter 10, with the rider facing toward a handlebar 32.

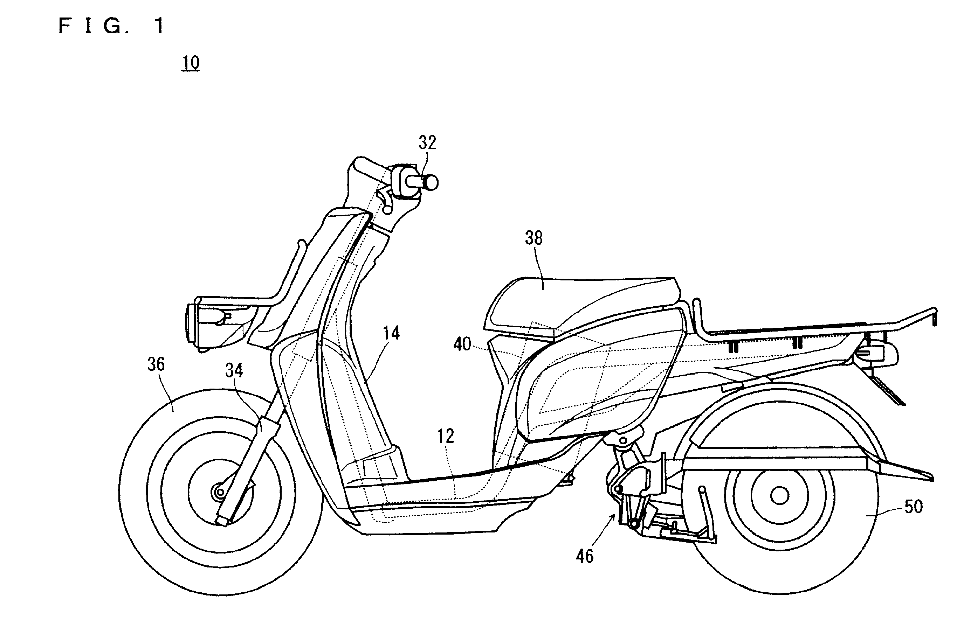

Fig. 1 is a side view of the scooter 10. The scooter 10 includes a body frame 12 and a body cover 14. It should be noted here that in Fig. 1, the body frame 12 is drawn in a simplified manner in order to avoid complication in the drawing.

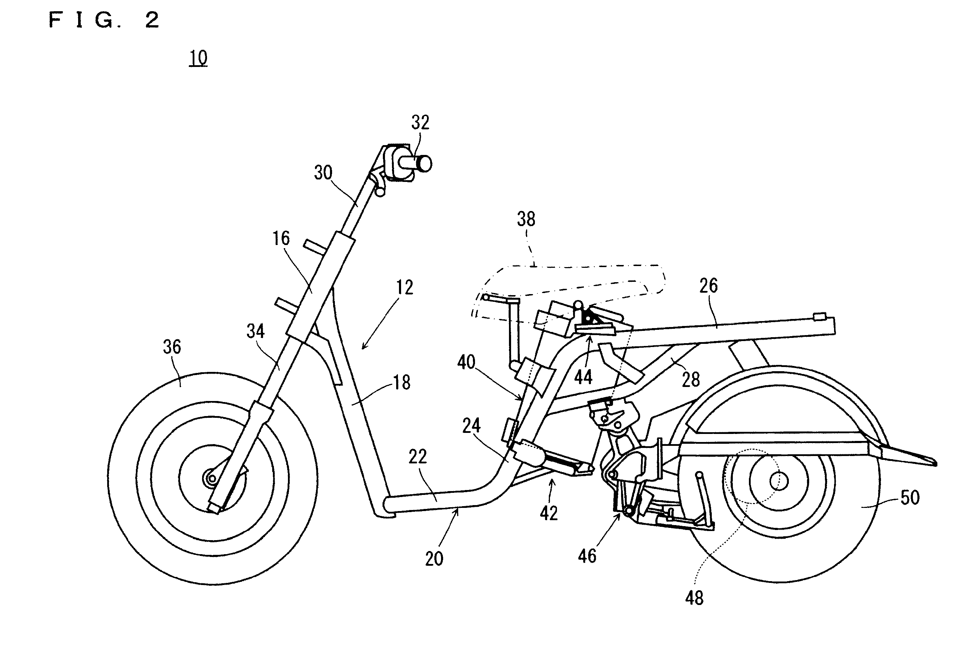

Fig. 2 is a side view showing the scooter 10 with its body cover 14 removed.

Referring to Fig. 2, the body frame 12 includes a head pipe 16; a front frame 18 extending from the head pipe 16 obliquely in a rearward and downward direction; and a pair of rear frames 20 (Fig. 2 shows only one rear frame 20 on the left side) extending rearward from a lower end portion of the front frame 18. The rear frames 20 extend side by side, being spaced from each other in a width direction (left-right direction) of the scooter 10.

Each of the rear frames 20 includes a first frame portion 22 extending rearward from the lower end portion of the front frame 18; a second frame portion 24 extending obliquely in an upward direction from a rear end portion of the first frame portion 22; a third frame portion 26 extending rearward from an upper end portion of the second frame portion 24 ; and a fourth frame portion 28 connecting the second frame portion 24 and the third frame portion 26 with each other. The fourth frame portion 28 extends from the second frame portion 24 obliquely in a rearward and upward direction to connect a middle portion of the second frame portion 24 in terms of the up-down direction with a middle portion of the third frame portion 26 in terms of the fore-aft direction.

A steering shaft 30 is inserted pivotably through the head pipe 16. The steering shaft 30 has an upper end portion, where a handlebar 32 is attached. The steering shaft 30 has a lower end portion where a front fork 34 is attached. The front fork 34 has lower end portions, supporting a front wheel 36 rotatably.

A seat 38 is provided above the second frame portion 24. Below the seat 38, the rear frames 20 support the battery pack 40. In the present embodiment, the battery pack 40 is supported by the rear frames 20 via a support member 42 provided at a lower end portion of the second frame portion 24 and a support member 44 provided at a front end portion of the third frame portion 26. Also, in the present embodiment, the battery pack 40 is tilted rearward when it is onboard.

The fourth frame portion 28 supports a swing unit 46 rotatably. The swing unit 46 includes an electric motor 48 and a rear wheel 50. In the scooter 10, the electric motor 48 is driven by electric power supplied from the battery pack 40, and an output from the electric motor 48 drives the rear wheel 50.

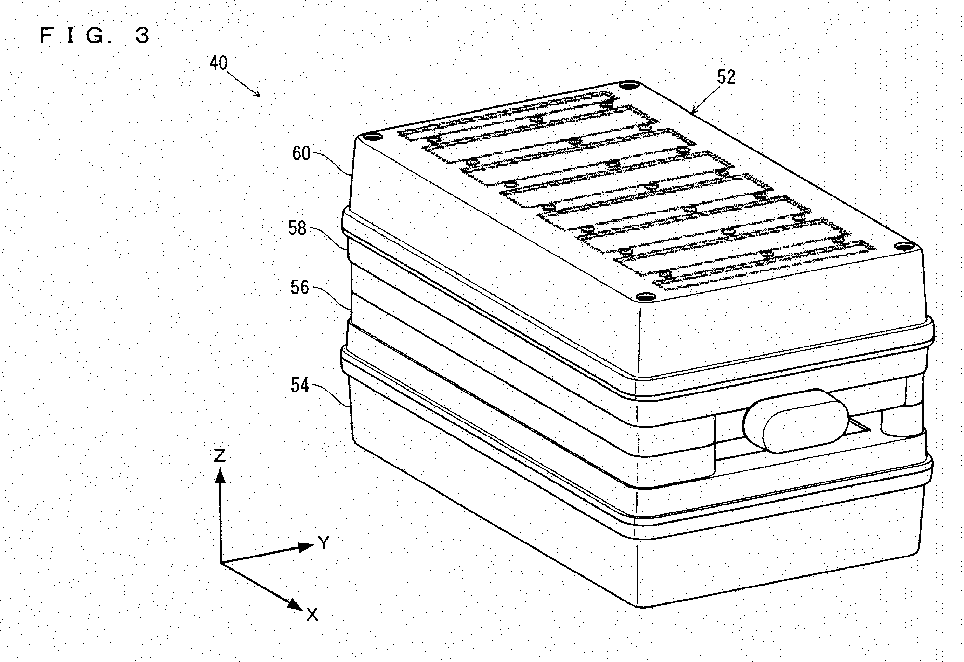

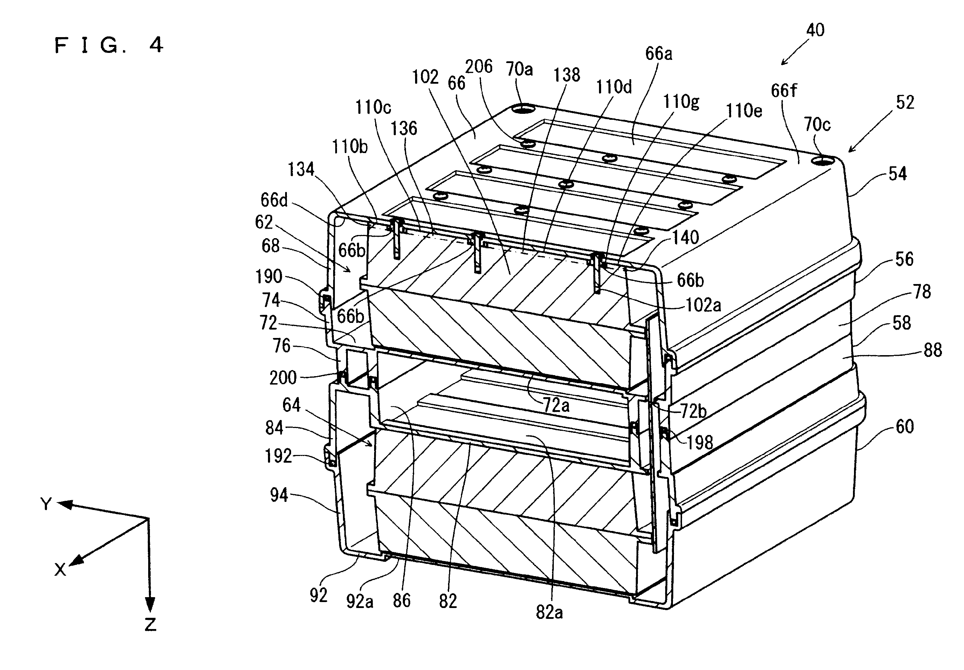

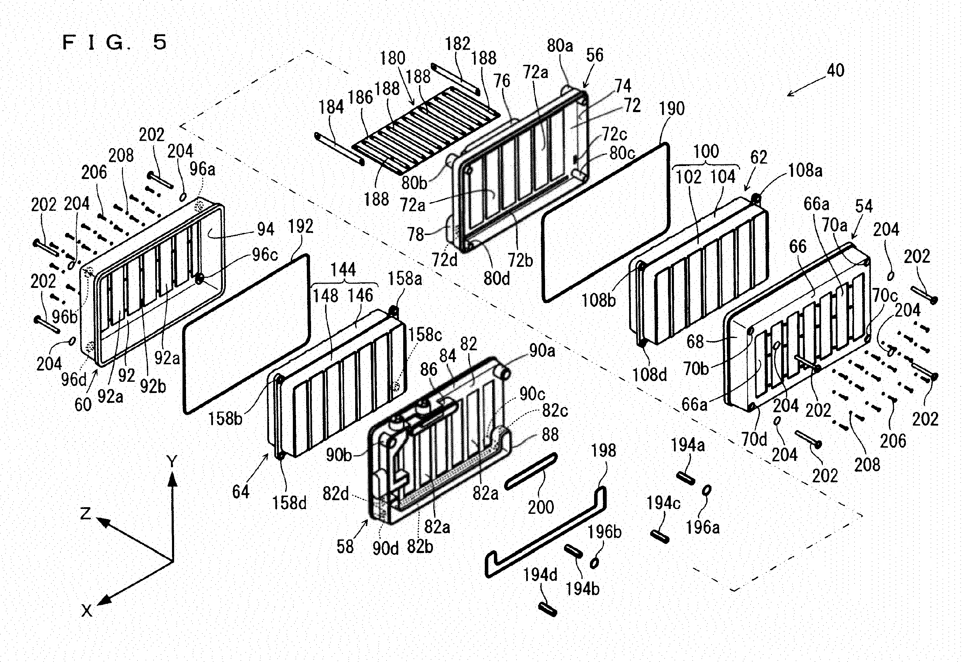

Fig. 3 is a perspective view which shows an external appearance of the battery pack 40, Fig. 4 is a perspective view which shows an internal structure of the battery pack 40, and Fig. 5 is an exploded perspective view which shows the battery pack 40. It should be noted here that in Fig. 4 and Fig. 5, components of the battery pack 40 are drawn in a simplified manner in order to avoid complication in the drawing. Also, Fig. 3 and the figures thereafter are accompanied with arrows which indicate mutually perpendicular three directions of X, Y and Z for clear understanding of positional relationships between components of the battery pack. In the present embodiment, the X direction represents the first direction, the Y direction represents the second direction and the Z direction represents the third direction. Also, in the present embodiment, the X direction is in parallel to a longitudinal direction (lengthwise direction) of an end surface 110 which will be described later, whereas the Y direction is in parallel to a lateral direction (widthwise direction) of the end surface 110.

Referring to Fig. 3 and Fig 4, the battery pack 40 includes a case 52. The case 52 is of a split design, including a plurality of case members each representing part of the case 52 as divided in the Z direction. In the present embodiment, the case 52 includes four case members 54, 56, 58, 60 divided in the Z direction. The case members 54, 56, 58, 60 are formed of an insulating material such as resin or other material such as aluminum for example. In the present embodiment, the case member 54 and the case member 60 each represent the first case member, whereas the case member 56 and the case member 58 each represent the second case member.

Referring to Fig. 4 and Fig. 5, the battery pack 40 further includes a first battery unit 62 and a second battery unit 64. The first battery unit 62 and the second battery unit 64 are encased in the case 52. More specifically, the first battery unit 62 is placed between the case member 54 and the case member 56, whereas the second battery unit 64 is placed between the case member 58 and the case member 60.

The case member 54 has a plate-like and generally rectangular (or rectangular) side wall portion 66, and a frame-like circumferential wall portion 68 protruding from an outer circumferential edge of the side wall portion 66 toward the case member 56. The side wall portion 66 has a plurality (seven, in the present embodiment) of protrusions 66a protruding toward the first battery unit 62. The protrusions 66a are generally rectangular (or rectangular) when viewed from the first battery unit 62 side (in a view from the Z direction). The protrusions 66a are generally rectangular (or rectangular) regions in the side wall portion 66, which look like being pressed out toward the first battery unit 62. The side wall portion 66 has its four corners formed with boss portions 70a, 70b, 70c, 70d for inserting bolts 202 which will be described later.

The case member 56 has a plate-like and generally rectangular (or rectangular) side wall portion 72, a frame-like circumferential wall portion 74 protruding from an outer circumferential edge of the side wall portion 72 toward the case member 54, and hollow connecting portions 76, 78 protruding from the side wall portion72 toward the case member 58. The connecting portion 76 is shaped correspondingly to a connecting portion 86, which will be described later, of the case member 58, whereas the connecting portion 78 is shaped correspondingly to a connecting portion 88, which will be described later, of the case member 58.

In the present embodiment, the side wall portion 66 and a side wall portion 92 which will be described later each represent the first side wall portion, whereas the side wall portion 72 and a side wall portion 82 which will be described later each represent the second side wall portion.

The side wall portion 72 has a plurality of protrusions 72a protruding toward the first battery unit 62, and through-holes 72b, 72c, 72d. The protrusions 72a have the same shape as the protrusions 66a. The through-hole 72b extends in the X direction along one of the long sides of the side wall portion 72. The through-hole 72c is rectangular, and is formed near one of the short sides of the side wall portion 72. The through-hole 72d is rectangular, and is formed near the other of the short sides of the side wall portion 72. The through-holes 72b, 72c, 72d are on an inner side of the connecting portion 78 when viewed from the case member 58 side (in a view from the Z direction). The side wall portion 72 has its four corners formed with boss portions 80a, 80b, 80c, 80d for inserting bolts 202.

The case member 58 has a plate-like and generally rectangular (or rectangular) side wall portion 82; a frame-like circumferential wall portion 84 protruding from an outer circumferential edge of the side wall portion 82 toward the case member 60; and hollow connecting portions 86, 88 protruding from the side wall portion 82 toward the case member 56.

The side wall portion 82 has a plurality of protrusions 82a protruding toward the first battery unit 64, and through-holes 82b, 82c, 82d. The protrusions 82a have the same shape as the protrusions 66a. The through-hole 82b extends in the X direction along one of the long sides of the side wall portion 82. The through-hole 82c is rectangular, and is formed near one of the short sides of the side wall portion 82. The through-hole 82d is rectangular, and is formed near the other of the short sides of the side wall portion 82. The through-holes 82b, 82c, 82d are on an inner side of the connecting portion 88 when viewed from the case member 56 side (in a view from the Z direction). The side wall portion 82 has its four corners formed with boss portions 90a, 90b, 90c, 90d for inserting bolts 202.

The case member 60 has a plate-like and generally rectangular (or rectangular) side wall portion 92, and a frame-like circumferential wall portion 94 protruding from an outer circumferential edge of the side wall portion 92 toward the case member 58. The side wall portion 92 has a plurality protrusions 92a protruding toward the second battery unit 64. The protrusions 92a have the same shape as the protrusions 66a. The side wall portion 92 has its four corners formed with boss portions 96a, 96b, 96c, 96d for inserting bolts 202.

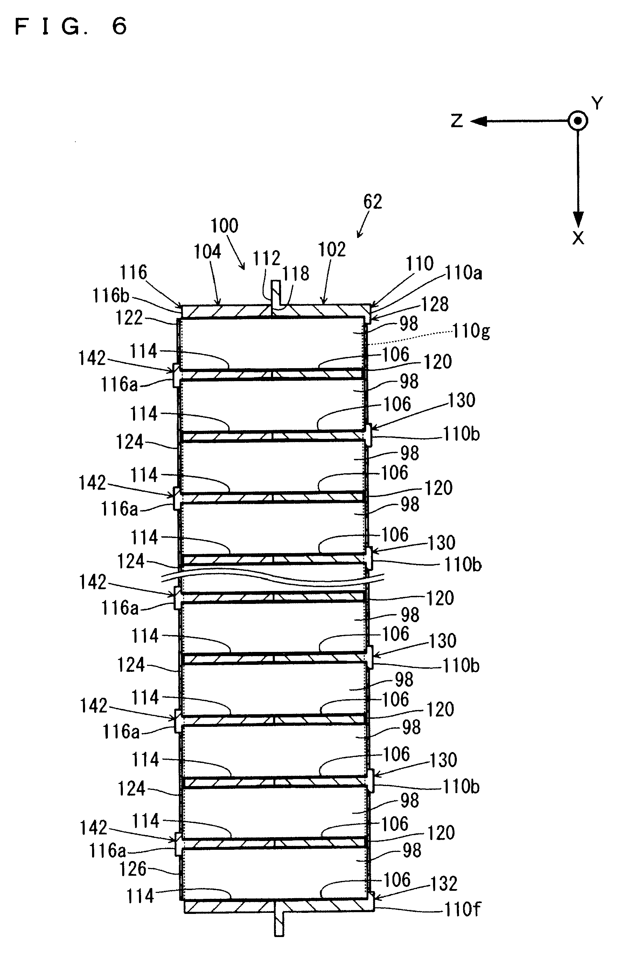

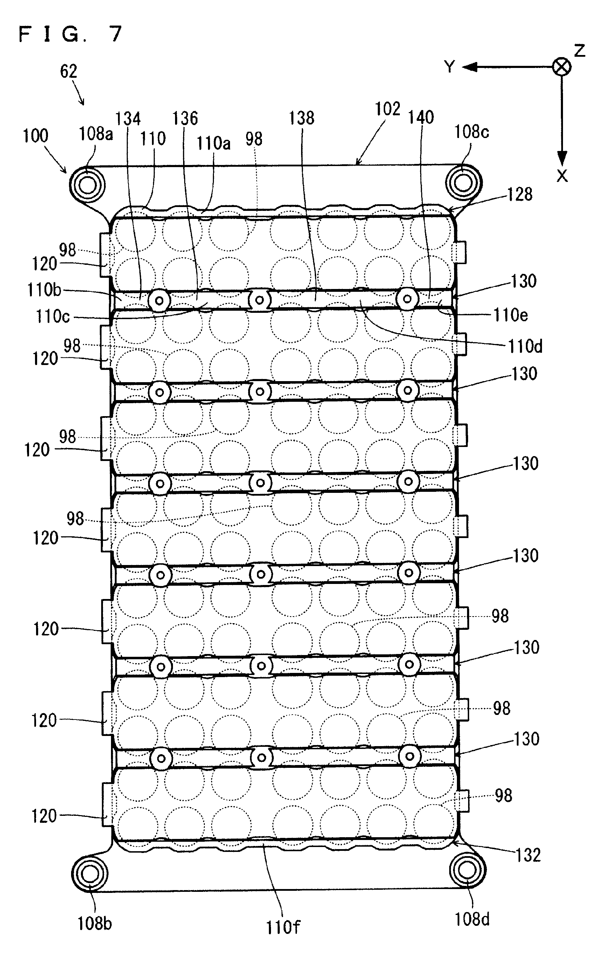

Fig. 6 is an illustrative sectional view showing the first battery unit 62, whereas Fig. 7 is a view of the first battery unit 62 taken from the side wall portion 66 side. It should be noted here that in Fig. 6, part of the first battery unit 62 is not illustrated in order to avoid complication in the drawing.

Referring to Fig. 6 and Fig. 7, the first battery unit 62 includes a plurality of rechargeable batteries 98 disposed in parallel to each other; and a battery holding portion 100 which holds the batteries 98. The batteries 98 are cylindrical, and are disposed in parallel to the Z direction. The battery holding portion 100 includes a generally rectangular parallelepiped (or rectangular parallelepiped) first holding portion 102, and a generally rectangular parallelepiped (or rectangular parallelepiped) second holding portion 104. The battery holding portion 100 and a battery holding portion 144 which will be described later are formed of an electrically insulating material such as resin.

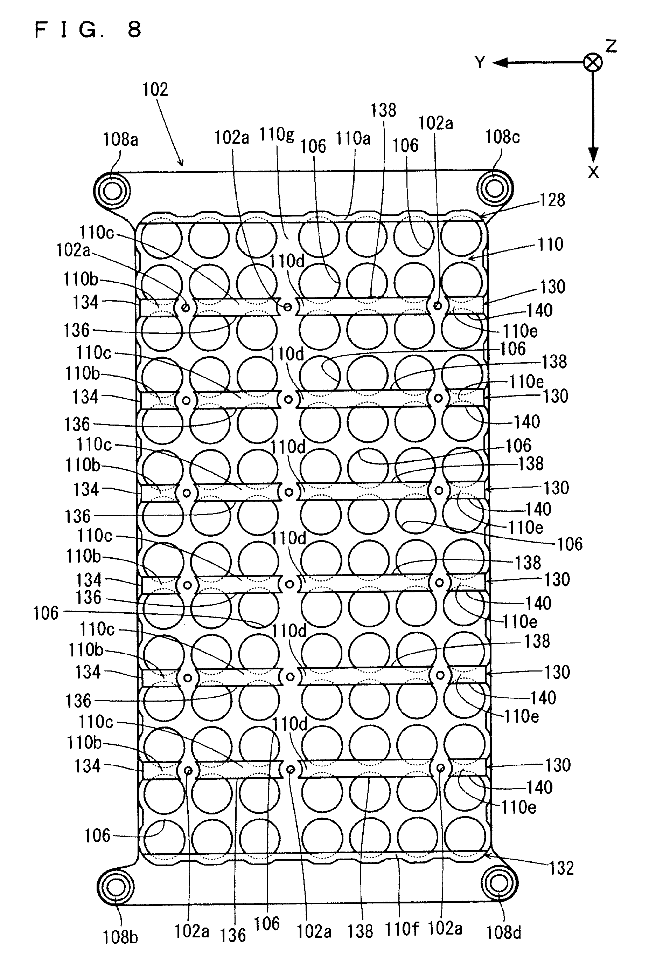

Fig. 8 is a view of the first holding portion 102 taken from the side wall portion 66 side.

Referring to Fig. 8, the first holding portion 102 has a plurality of through-holes 106, and the boss portions 108a, 108b, 108c, 108d. The through-holes 106 are arranged in a grid pattern, in fourteen (14) rows across the X direction and in seven (7) columns across the Y direction. Referring to Fig. 6, the through-holes 106 extend in the Z direction, providing communication between an end surface 110 on a first side (a side facing the side wall portion 66 (see Fig. 5) in the present embodiment) of the first holding portion 102 and an end surface 112 on a second side (a side facing the second holding portion 104 in the present embodiment) of the first holding portion 102. Referring to Fig. 5, Fig. 7 and Fig. 8, the boss portions 108a, 108b, 108c, 108d are formed at four corners of the first holding portion 102 correspondingly to the boss portions 70a, 70b, 70c, 70d of the case members 54 and to the boss portions 80a, 80b, 80c, 80d of the case member 56.

Referring to Fig. 6, the second holding portion 104 has a plurality of through-holes 114. The through-holes 114 are arranged in a grid pattern like the through-holes 106, in fourteen (14) rows across the X direction and in seven (7) columns across the Y direction. Also, the through-holes 114 extend in the Z direction, providing communication between an end surface 116 on a first side (a side facing the side wall portion 72 (see Fig. 5) in the present embodiment) of the second holding portion 104 and an end surface 118 on a second side (a side facing the first holding portion 102 in the present embodiment) of the second holding portion 104. Each of the end surface 110 and the end surface 116 is across the Z direction. In other words, the end surface 110 and the end surface 116 each extend at least in the X direction and the Y direction. The end surface 110 and the end surface 116 are spaced from each other in the Z direction.

In the first battery unit 62, the end surface 110 represents the first end surface, whereas the end surface 116 represents the second end surface. In the present embodiment, the end surface 110 opposes to the side wall portion 66 (see Fig. 5), whereas the end surface 116 opposes to the side wall portion 72 (see Fig. 5).

Referring to Fig. 6, the first holding portion 102 and the second holding portion 104 are fitted to each other so that the through-holes 106 communicate with the through-holes 114 and each of the batteries 98 can be held in one of the paired through-holes 106, 114. Referring to Fig. 7, the batteries 98 are arranged in not less than three (3) rows across the X direction and not less than three (3) columns across the Y direction. In the present embodiment, the batteries 98 are arranged in fourteen rows across the X direction and in seven columns across the Y direction, in a grid pattern. In the following description, the row which is closest to the boss portions 108a, 108c will be called the first row, and the row which is closest to the boss portions 108b, 108d will be called the fourteenth row. Also, the column which is closest to the boss portions 108a, 108b will be called the first column, and the column which is closest to the boss portions 108c, 108d will be called the seventh column. In the present embodiment, the batteries 98 are held in the battery holding portion 100 in such a pattern that those batteries 98 disposed in the even-number rows and those disposed in the odd-number rows are oriented in opposite directions from each other. Specifically, for example, the batteries 98 in the first, third, fifth, seventh, ninth, eleventh and thirteenth rows are disposed so that their negative electrodes face the side wall portion 66 (see Fig. 5), whereas the batteries 98 in the second, fourth, sixth, eighth, tenth, twelfth and fourteenth rows are disposed so that their positive electrodes face the side wall portion 66 (see Fig. 5).

Referring to Fig. 6 and Fig. 7, on the end surface 110 side of the first holding portion 102, there is provided a plurality (seven, in the present embodiment) of plate-like conductor members 120 extending in the Y direction for electrically connecting the batteries 98.

The conductor members 120 are placed between the end surface 110 and the side wall portion 66 (see Fig. 5), being spaced from each other in the X direction. More specifically, one conductor member 120 is connected to first end portions (on the end surface 110 side, in the present embodiment) of the batteries 98 in the first row, and to first end portions (on the end surface 110 side, in the present embodiment) of the batteries 98 in the second row. This establishes electrically parallel connection among the first end portions of the batteries 98 in the first row, and electrically parallel connection among the first end portions of the batteries 98 in the second row. Also, this establishes electrically series connection between the first end portions of the batteries 98 in the first row and the first end portions of the batteries 98 in the second row. In the same fashion, six conductor members 120 are connected to the first end portions of the batteries 98 in the third row through the fourteenth row. Specifically, one conductor member 120 is used to connect the batteries 98 in two adjacent rows.

Referring to Fig. 6, on the end surface 116 side of the second holding portion 104, there is provided a plurality of plate-like conductor members 122, 124, 126 extending in the Y direction for electrically connecting the batteries 98. The present embodiment uses one conductor member 122, six conductor members 124 and one conductor member 126.

The conductor members 122, 124, 126 are placed between the end surface 116 and the side wall portion 72 (see Fig. 5), being spaced from each other in the X direction. More specifically, the conductor member 122 is connected to second end portions (on the end surface 116 side, in the present embodiment) of the batteries 98 in the first row. This establishes electrically parallel connection among the second end portions of the batteries 98 in the first row. One conductor member 124 is connected to the second end portions of the batteries 98 in the second row and to the second end portions of the batteries 98 in the third row. This establishes electrically parallel connection among the second end portions of the batteries 98 in the second row, and electrically parallel connection among the second end portions of the batteries 98 in the third row. Also, this establishes electrically series connection between the second end portions of the batteries 98 in the second row and the second end portions of the batteries 98 in the third row. In the same fashion, five conductor members 124 are connected to the second end portions of the batteries 98 in the fourth row through the thirteenth row. Specifically, one conductor member 124 is used to connect the batteries 98 in two adjacent rows. The conductor member 126 is connected to the second end portions of the batteries 98 in the fourteenth row. This establishes electrically parallel connection among the second end portions of the batteries 98 in the fourteenth row.

The conductor members 120, 122, 124, 126 are, for example, welded to the batteries 98.

Referring to Fig. 6, Fig. 7 and Fig. 8, the first holding portion 102 has a plurality of limiters 128, 130, 132 at an end portion (on the side wall portion 66 (see Fig. 5) side, in the present embodiment), i.e., at an end portion in the Z direction, for limiting the batteries 98 from moving toward the side wall portion 66. The limiters 128, 130, 132 are spaced from each other in the X direction. The present embodiment uses one limiter 128, six limiters 130 and one limiter 132.

The limiter 128 protrudes toward the side wall portion 66 (see Fig. 5), at a first end portion (on the boss portions 108a, 108c (see Fig. 7) side, in the present embodiment) in the X direction of the first holding portion 102, and extends in the Y direction. Referring to Fig. 7, when viewed from the side wall portion 66 (see Fig. 5) side (in a view from Z direction), part of each battery 98 in the first row overlaps part of the limiter 128. Thus, the limiter 128 limits movement of the batteries 98 in the first row.

Referring to Fig. 7, each of the limiters 130 is between one conductor member 120 and another conductor member 120. Referring to Fig. 8, each limiter 130 includes a plurality of protrusions 134, 136, 138, 140 spaced from each other in the Y direction and arranged in-line in the Y direction. The protrusions 134, 136, 138, 140 protrude toward the side wall portion 66 (see Fig. 5) and extend in the Y direction. Referring to Fig. 7, when viewed from the side wall portion 66 (see Fig. 5) side, part of each battery 98 in the second through the thirteenth rows overlaps part of their corresponding one of the limiters 130. Thus, the limiters 130 limit movement of the batteries 98 in the second row through the thirteenth row.

Referring to Fig. 6, Fig. 7 and Fig. 8, the limiter 132 protrudes toward the side wall portion 66 (see Fig. 5), at a second end portion (on the boss portions 108b, 108d (see Fig. 7) side, in the present embodiment) in the X direction of the first holding portion 102, and extends in the Y direction. Referring to Fig. 7, when viewed from the side wall portion 66 (see Fig. 5) side, part of each battery 98 in the fourteenth row overlaps part of the limiter 132. Thus, the limiter 132 limits movement of the batteries 98 in the fourteenth row.

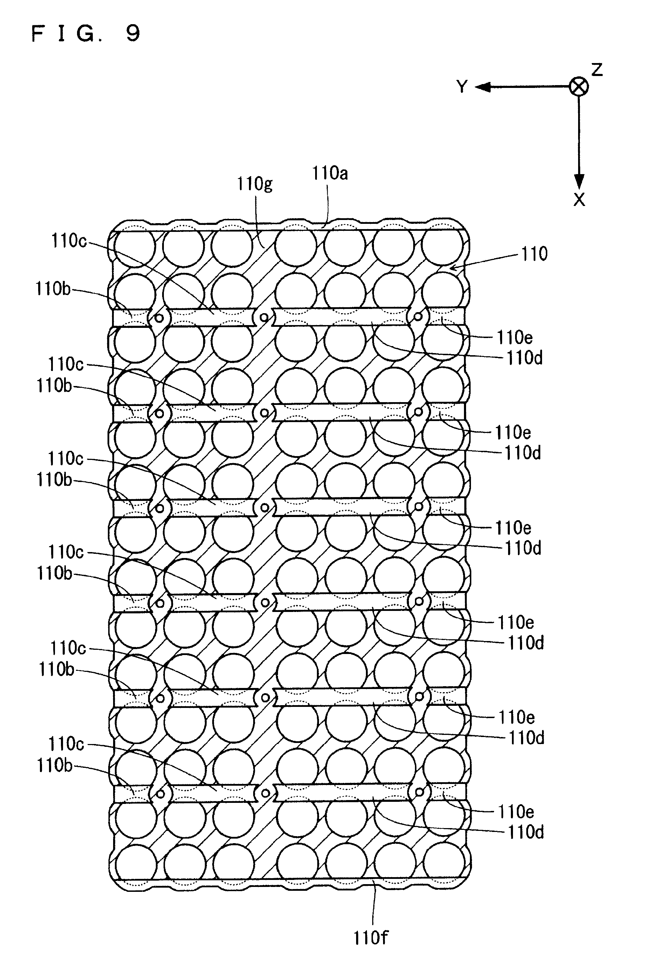

Fig. 9 shows the end surface 110 of the battery holding portion 100.

Referring to Fig. 9, the end surface 110 includes a protruded surface 110a protruded toward the side wall portion 66 (see Fig. 5); a plurality of protruded surfaces 110b, 110c, 110d, 110e protruded toward the side wall portion 66; a protruded surface 110f protruded toward the side wall portion 66; and a main surface 110g. The main surface 110g is hatched in Fig. 9 for easier understanding.

Referring to Fig. 8 and Fig. 9, in the present embodiment, the protruded surface 110a is an end surface of the limiter 128 on the side wall portion 66 (see Fig. 5) side; the protruded surface 110b is an end surface of the protrusion 134 on the side wall portion 66 side; the protruded surface 110c is an end surface of the protrusion 136 on the side wall portion 66 side; the protruded surface 110d is an end surface of the protrusion 138 on the side wall portion 66 side; the protruded surface 110e is an end surface of the protrusion 140 on the side wall portion 66 side; and the protruded surface 110f is an end surface of the limiter 132 on the side wall portion 66 side. Also, referring to Fig. 9, the main surface 110g is a region in the end surface 110 excluding the protruded surfaces 110a through 110f when viewed from the side wall portion 66 side. The protruded surfaces 110a through 110f are flat surfaces. Likewise, the main surface 110g of the end surface 110 is a flat surface.

Referring to Fig. 7, each of the protruded surfaces 110b is formed between one conductor member 120 and another conductor member 120. Therefore, the protruded surfaces 110b are spaced from each other in the X direction. Likewise, each of the protruded surfaces 110c, 110d, 110e is formed between one conductor member 120 and another conductor member 120. Therefore, the protruded surfaces 110c, the protruded surfaces 110d and the protruded surfaces 110e are each formed at a space in the X direction.

Referring to Fig. 6 and Fig. 8, the protruded surfaces 110a through 110f are at the same location in the Z direction. The protruded surfaces 110a through 110f are parallel to the side wall portion 66 (see Fig. 5). Likewise, the main surface 110g is parallel to the side wall portion 66. Therefore, the main surface 110g is parallel to the protruded surfaces 110a through 110f. The protruded surfaces 110a through 110f and the main surface 110g are parallel to the XY plane. In other words, the protruded surfaces 110a through 110f and the main surface 110g are perpendicular to the Z direction. The protruded surfaces 110a through 110f are on the side wall portion 66 (see Fig. 5) side in the Z direction than the main surface 110g and the conductor members 120 (see Fig. 6). In other words, the protruded surfaces 110a through 110f are on the side wall portion 66 side in the Z direction with respect to the main surface 110g and the conductor members 120. The protruded surfaces 110b through 110e are each between two of the conductor members 120 when viewed from the side wall portion 66 side. The protruded surface 110b has a greater dimension (width) in the Y direction than a dimension (width) of the protruded surface 110b in the X direction. Likewise, the protruded surfaces 110c through 110e each have a greater dimension (width) in the Y direction than a dimension (width) of the protruded surfaces 110c through 110e in the X direction.

Referring to Fig. 6, the second holding portion 104 has a plurality of limiters 142 at an end portion (on the side wall portion 72 (see Fig. 5) side, in the present embodiment), i.e., at an end portion in the Z direction, for limiting the batteries 98 from moving toward the side wall portion 72. The present embodiment includes seven limiters 142 (Fig. 6 shows five of the seven limiters 142). Each of the limiters 142 protrudes toward the side wall portion 72 and extends in the Y direction. The limiters 142 are spaced from each other in the X direction. In the present embodiment, the limiters 142 are each between two of the conductor members 122, 124, 126.

Referring to Fig. 6, when viewed from the side wall portion 72 (see Fig. 5) side (in a view from the Z direction), part of each battery 98 overlaps part of their corresponding limiter 142. Thus, the limiters 142 limit movement of the batteries 98. It should be noted here that in the present embodiment, the limiter 130 of the first holding portion 102 includes four protrusions 134, 136, 138, 140, whereas the limiter 142 of the second holding portion 104 is a single protrusion extending in the Y direction.

The end surface 116 includes a plurality of protruded surfaces 116a protruding toward the side wall portion 72 (see Fig. 5) side, and a main surface 116b. In the present embodiment, the protruded surfaces 116a are end surfaces of the limiters 142 on the side wall portion 72 side. The protruded surfaces 116a are spaced from each other in the X direction. Also, the main surface 116b is a region in the end surface 116 excluding the protruded surfaces 116a when viewed from the side wall portion 72 side.

In the present embodiment, the protruded surfaces 116a are at the same location in the Z direction. The protruded surfaces 116a are parallel to the side wall portion 72. Likewise, the main surface 116b is parallel to the side wall portion 72. Therefore, the main surface 116b is parallel to the protruded surfaces 116a. The protruded surfaces 116a and the main surface 116b are parallel to the XY plane. In other words, the protruded surfaces 116a and the main surface 116b are perpendicular to the Z direction. The protruded surfaces 116a are on the side wall portion 72 (see Fig. 5) side in the Z direction than the main surface 116b and the conductor members 122, 124, 126. In other words, the protruded surfaces 116a are on the side wall portion 72 (see Fig. 5) side in the Z direction with respect to the main surface 116b and to the conductor members 122, 124, 126. The protruded surfaces 116a are each between two of the conductor members 122, 124, 126 when viewed from the side wall portion 72 side. The protruded surface 116a has a greater dimension (width) in the Y direction than a dimension (width) of the protruded surface 116a in the X direction.

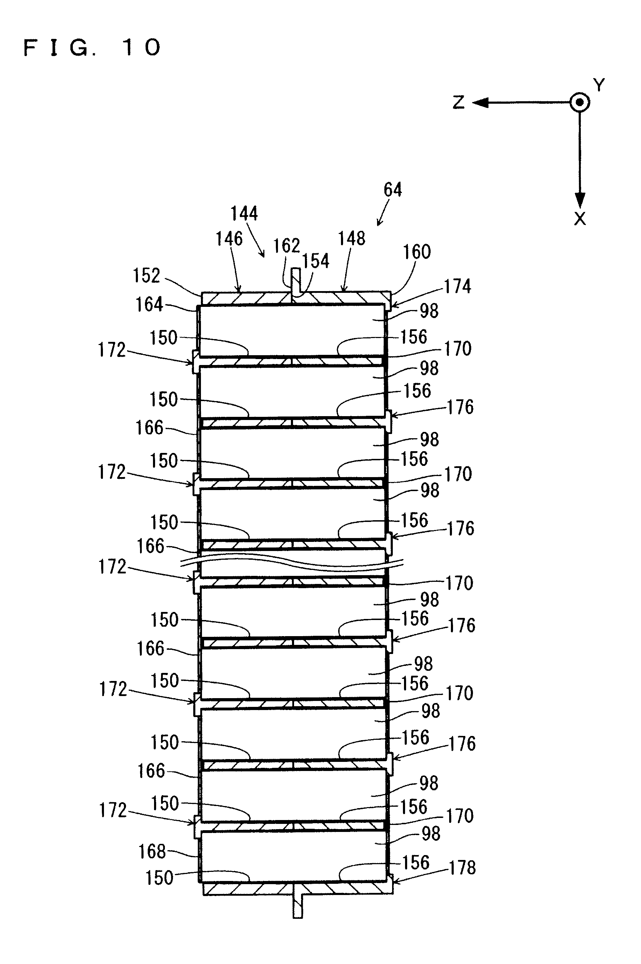

Fig. 10 is an illustrative sectional view showing a second battery unit 64. It should be noted here that in Fig. 10, part of the second battery unit 64 is not illustrated in order to avoid complication in the drawing.

Referring to Fig. 10, the second battery unit 64 includes a plurality of batteries 98 disposed in parallel to each other; and a battery holding portion 144 which holds the batteries 98. The battery holding portion 144 includes a generally rectangular parallelepiped (or rectangular parallelepiped) first holding portion 146, and a generally rectangular parallelepiped (or rectangular parallelepiped) second holding portion 148.

Like the second holding portion 104 (see Fig. 6) of the first battery unit 62 (see Fig 6), the first holding portion 146 has a plurality of through-holes 150 arranged in a grid pattern in fourteen (14) rows across the X direction and seven (7) columns across the Y direction. The through-holes 150 extend in the Z direction, providing communication between an end surface 152 on a first side (a side facing the side wall portion 92 (see Fig. 5) in the present embodiment) of the first holding portion 146 and an end surface 154 on a second side (a side facing the second holding portion 148 in the present embodiment) of the first holding portion 146.

Like the first holding portion 102 (see Fig. 6) of the first battery unit 62 (see Fig. 6), the second holding portion 148 has a plurality of through-holes 156 arranged in a grid pattern in fourteen (14) rows across the X direction and seven (7) columns across the Y direction, and boss portions 158a, 158b, 158c, 158d (see Fig. 5). The through-holes 156 extend in the Z direction, providing communication between an end surface 160 on a first side (a side facing the side wall portion 82 (see Fig. 5) in the present embodiment) of the second holding portion 148 and an end surface 162 on a second side (a side facing the first holding portion 146 in the present embodiment) of the second holding portion 148. Each of the end surface 152 and the end surface 160 is across the Z direction. In other words, the end surface 152 and the end surface 160 each extend at least in the X direction and in the Y direction. The end surface 152 and the end surface 160 are spaced from each other in the Z direction.

In the second battery unit 64, the end surface 152 represents the first end surface, whereas the end surface 160 represents the second end surface. In the present embodiment, the end surface 152 opposes to the side wall portion 92 (see Fig. 5), whereas the end surface 160 opposes to the side wall portion 82 (see Fig. 5).

Referring to Fig. 10, the first holding portion 146 and the second holding portion 148 are fitted to each other so that the through-holes 150 communicate with the through-holes 156 and each of the batteries 98 is held in one of the paired through-holes 150, 156. The batteries 98 are arranged in not less than three (3) rows across the X direction and not less than three (3) columns across the Y direction. In the present embodiment, the batteries 98 are arranged in fourteen (14) rows across the X direction and in seven (7) columns across the Y direction, in a grid pattern. Like the batteries 98 in the battery unit 62 for example, the batteries 98 in the second battery unit 64 are held in the battery holding portion 144 in such a pattern that the batteries 98 in the odd-numbered rows and those in the even-numbered rows are oriented in reverse directions from each other.

On the end surface 152 side of the first holding portion 146, there is provided a plurality of plate-like conductor members 164, 166, 168 extending in the Y direction for electrically connecting the batteries 98. The present embodiment uses one conductor member 164, six conductor members 166 and one conductor member 168. Like the conductor members 122, 124, 126 in the first battery unit 62, the conductor members 164, 166, 168 are between the end surface 152 and the side wall portion 92 (see Fig. 5), being spaced from each other in the X direction. Specifically, one conductor member 164 is connected to the batteries 98 in the first row. The six conductor members 166 are connected to the batteries 98 in the second row through the thirteenth row. More specifically, one conductor member 166 is used to connect the batteries 98 in two adjacent rows. The conductor member 168 is connected to the batteries 98 in the fourteenth row.

On the end surface 160 side of the second holding portion 148, there is provided a plurality (seven in the present embodiment) of plate-like conductor members 170 extending in the Y direction for electrically connecting the batteries 98. Like the conductor members 120 (see Fig. 6) in the first battery unit 62 (see Fig. 6), the conductor members 170 are placed between the end surface 160 and the side wall portion 82 (see Fig. 5), being spaced from each other in the X direction. More specifically, one conductor member 170 is used to connect the batteries 98 in two adjacent rows.

The conductor members 164, 166, 168, 170 are, for example, welded to the batteries 98.

Referring to Fig. 10, like the second holding portion 104 (see Fig. 6) of the first battery unit 62 (see Fig. 6), the first holding portion 146 has a plurality (seven, in the present embodiment) of limiters 172. Each of the limiters 172 protrudes toward the side wall portion 92 (see Fig. 5) and extends in the Y direction. The limiters 172 are spaced from each other in the X direction. It should be noted here that the limiters 142 (see Fig. 6) in the second holding portion 104 (see Fig. 6) are each formed as a single protrusion, whereas the limiters 172 each include a plurality of protrusions like the limiters 130 (see Fig. 8) of the first holding portion 102 (see Fig. 8). Though it will not be elaborated very much, the end surface 152 includes a main surface and a plurality of protruded surfaces. The protruded surfaces in the end surface 152 are end surfaces on the side wall portion 92 side, of the protrusions of the limiters 172. The main surface of the end surface 152 is a region in the end surface 152 excluding the protruded surfaces when viewed from the side wall portion 92 side.

Like the first holding portion 102 (see Fig. 8) of the first battery unit 62, the second holding portion 148 has a plurality of limiters 174, 176, 178. The present embodiment uses one limiter 174, six limiters 176 and one limiter 178. Each of the limiters 174, 176, 178 protrudes toward the side wall portion 82 (see Fig. 5) and extends in the Y direction. The limiters 174, 176, 178 are spaced from each other in the X direction. It should be noted here that each of the limiters 130 in the first holding portion 102 (see Fig. 8) includes the protrusions 134, 136, 138, 140 (see Fig. 8), whereas each of the limiters 176 is formed as a single protrusion. The limiter 174 has the same configuration as the limiter 128 (see Fig. 8), whereas the limiter 178 has the same configuration as the limiter 132 (see Fig. 8). Though it will not be elaborated very much, the end surface 160 includes a main surface and a plurality of protruded surfaces. The protruded surfaces in the end surface 160 are end surfaces on the side wall portion 82 side, of the limiters 174, 176, 178. The main surface of the end surface 160 is a region in the end surface 160 excluding the protruded surfaces when viewed from the side wall portion 82 side.

Referring to Fig. 5, the first battery unit 62 and the second battery unit 64 are connected with each other by a connecting unit 180, a conductor member 182, and a conductor member 184. The connecting unit 180 includes a substrate 186, and a plurality of conductor members 188 fixed to the substrate 186. The connecting unit 180 is inserted into the through-hole 72b in the case member 56 and the through-hole 82b in the case member 58 ; and the conductor member 182 is inserted into the through-hole 72c of the case member 56 and the through-hole 82c of the case member 58. The conductor member 184 is inserted into the through-hole 72d of the case member 56 and the through-hole 82d of the case member 58. The batteries 98 (see Fig. 6) in the first battery unit 62 and the batteries 98 (see Fig. 10) in the second battery unit 64 are electrically connected with each other via the conductor member 182, the conductor member 184 and the conductor members 188. In the present embodiment, input and output of electrical power to and from the batteries 98 in the first battery unit 62 and the second battery unit 64 are performed via a positive power-supply terminal (not illustrated) and a negative power-supply terminal (not illustrated) provided in the case 52.

Referring to Fig. 5, the first battery unit 62 is encased by the case member 54 and the case member 56, whereas the second battery unit 64 is encased by the case member 58 and the case member 60. The circumferential wall portion 68 of the case member 54 and the circumferential wall portion 74 of the case member 56 are fitted to each other with an annular seal member 190 sandwiched therebetween. The circumferential wall portion 84 of the case member 58 and the circumferential wall portion 94 of the case member 60 are fitted to each other with an annular seal member 192 sandwiched therebetween.

The seal member 190 and the seal member 192 may be provided by a variety of gaskets. In the present embodiment, the seal members 190, 192 may be provided by gaskets made of resin (rubber, plastic, etc.), metal or liquid for example. The same applies to the seal members 196a, 196b, 198, 200, 204, 208 which will be described later.

Nuts 194a, 194b, 194c, 194d are provided between the case member 56 and the case member 58.

The nut 194a is housed in the boss portion 80a of the case member 56 and the boss portion 90a of the case member 58. The nut 194b is housed in the boss portion 80b of the case member 56 and the boss portion 90b of the case member 58. The boss portion 80a and the boss portion 90a are fitted to each other with an annular seal member 196a sandwiched therebetween, whereas the boss portion 80b and the boss portion 90b are fitted to each other with an annular seal member 196b sandwiched therebetween.

The nuts 194c, 194d are housed in the connecting portion 78 of the case member 56 and the connecting portion 88 of the case member 58 , The nut 194c is sandwiched by the boss portion 80c and the boss portion 90c, whereas the nut 194d is sandwiched by the boss portion 80d and the boss portion 90d. The connecting portion 78 and the connecting portion 88 are fitted to each other with an annular seal member 198 sandwiched therebetween. The connecting portion 76 of the case member 58 and the connecting portion 86 of the case member 58 are fitted to each other with an annular seal member 200 sandwiched therebetween.

The case 52 thus assembled as described above is connected to the first battery unit 62 and the second battery unit 64 by a plurality of bolts 202.

In the present embodiment, four bolts 202 are inserted into the boss portions 70a, 70b, 70c, 70d in the case member 54, the boss portions 108a, 108b, 108c, 108d in the first battery unit 62, and the boss portions 80a, 80b, 80c, 80d in the case member 56. Likewise, four bolts 202 (Fig. 5 shows only three bolts 202) are inserted into boss portions 96a, 96b, 96c, 96d in the case member 60, the boss portions 158a, 158b, 158c, 158d in the second battery unit 64, and boss portions 90a, 90b, 90c, 90d in the case member 58. These bolts 202 have their tip portions fixed by the corresponding nuts 194a, 194b, 194c, 194d. This binds the case 52, the first battery unit 62 and the second battery unit 64 together. It should be noted here that an annular seal member 204 is inserted into each of the boss portions 70a, 70b, 70c, 70d, 96a, 96b, 96c, 96d.

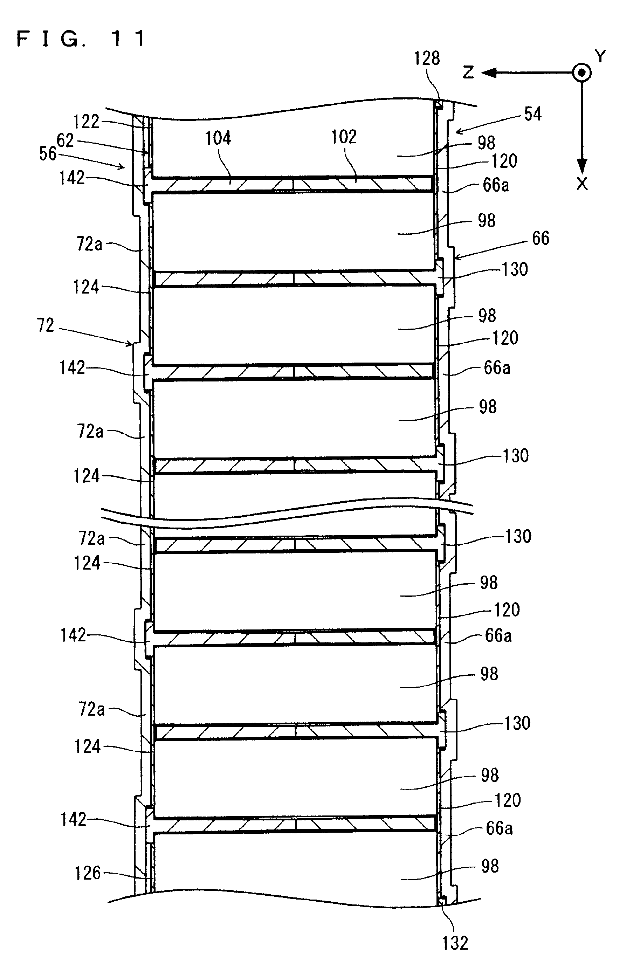

Fig. 11 shows a relationship between the case 52 and the first battery unit 62 fitted to each other as described above.

Referring to Fig. 11, when the case 52 and the first battery unit 62 are fitted with each other, one protrusion 66a of the side wall portion 66 comes between the limiter 128 and the adjacent limiter 130, another between the limiter 130 and the next limiter 130, and the last one between the limiter 130 and the limiter 132, of the first holding portion 102. This arrangement makes it possible to position the protrusions 66a and the conductor members 120 within proximity or in contact with each other. Specifically, the arrangement makes it possible to position the side wall portion 66 and the conductor members 120 within proximity or in contact with each other. Likewise, the protrusions 72a of the side wall portion 72 come between one of the limiters 142 and another of the limiters 142 of the second holding portion 104. This arrangement makes it possible to position the protrusions 72a and the conductor members 124 within proximity or in contact with each other. Specifically, the arrangement makes it possible to position the side wall portion 72 and the conductor members 124 within proximity or in contact with each other. Likewise, referring to Fig. 5 and Fig. 10, when the case 52 and the second battery unit 64 are fitted to each other, each protrusion 92a of the side wall portion 92 comes between one limiter 172 and the next limiter 172 of the first holding portion 146. Also, each protrusion 82a of the side wall portion 82 comes between one limiter 174 and the next limiter 176, between the limiter 176 and the next limiter 176, or between the limiter 176 and the limiter 178 of the second holding portion 148.

Referring to Fig. 4 and Fig. 5, the side wall portion 66 of the case member 54 is fixed to the end surface 110 (see Fig. 6) of the first holding portion 102 of the first battery unit 62 using a plurality (eighteen in the present embodiment) of screws 206. In the present embodiment, the side wall portion 66 is fixed to the end surface 110 at a plurality of locations in the X direction as well as a plurality of locations in the Y direction. More specifically, the side wall portion 66 is fixed to the end surface 110 at six (6) locations in the X direction and three (3) locations in the Y direction. The screws 206 serving as fixing members for fixing the side wall portion 66 to the end surface 110 may be provided by ordinary screws (bolts), or special screws such as tapping screws.

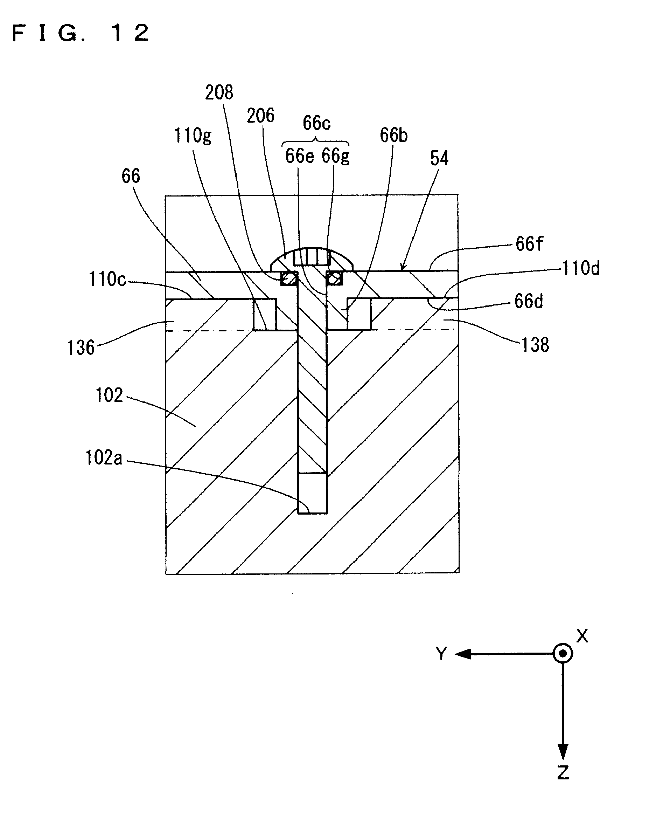

Fig. 12 is a sectional view showing a relationship between the side wall portion 66, the first holding portion 102 and the screws 206.

Referring to Fig. 4, Fig. 8 and Fig. 12, the first holding portion 102 has a plurality (eighteen in the present embodiment) of screw holes 102a extending in the Z direction and opening in the main surface 110g of the end surface 110. The screw holes 102a are formed at a plurality of locations in the X direction as well as at a plurality of locations in the Y direction. In the present embodiment, the screw holes 102a are made at six (6) locations in the X direction and at three (3) locations in the Y direction.

Specifically, referring to Fig. 8, in the present embodiment, when viewed from the side wall portion 66 (see Fig. 5) side, one screw hole 102a is made between the protruded surface 110b (the protrusion 134) and the protruded surface 110c (the protrusion 136), another between the protruded surface 110c (the protrusion 136) and the protruded surface 110d (the protrusion 138), and another between the protruded surface 110d (the protrusion 138) and the protruded surface 110e (the protrusion 140).

Referring to Fig. 12, the side wall portion 66 of the case member 54 has a plurality of salients 66b and a plurality of through-holes 66c. The salients 66b are circular (in their section parallel to the XY plane), protruding toward the first holding portion 102 at an inner surface 66d side of the side wall portion 66. The through-holes 66c are circular (in their section parallel to the XY plane), and penetrate the side wall portion 66 through the salients 66b in the Z direction. The through-hole 66c includes a small-diameter portion 66e opening in the inner surface 66d of the side wall portion 66; and a large-diameter portion 66g opening in an outer surface 66f of the side wall portion 66 and having a greater diameter than the small-diameter portion 66e. In a view from the Z direction, the small-diameter portion 66e and the large-diameter portion 66g are concentric to each other.

The salients 66b and the through-holes 66c are formed at a plurality of locations in the X direction as well as at a plurality of locations in the Y direction, correspondingly to the screw holes 102a. Therefore, in the present embodiment, the salients 66b and the through-holes 66c are made at six (6) locations in the X direction and at three (3) locations in the Y direction.

Referring to Fig. 4 and Fig. 12, one of the salients 66b of the side wall portion 66 is between the protrusion 134 and the protrusion 136, another is between the protrusion 136 and the protrusion 138, and still another is between the protrusion 138 and the protrusion 140.

Referring to Fig. 12, an annular seal member 208 is fitted into the large-diameter portion 66g of the through-hole 66c. Via the seal member 208, the screw 206 is inserted through the through-hole 66c and then threaded into the screw hole 102a. In the present embodiment, the inner surface 66d of the side wall portion 66 makes contact with the protruded surfaces 110a through 110f (see Fig. 8) and the main surface 110g as the screws 206 are tightened.

Referring to Fig. 5, though it will not be detailed very much, the side wall portion 92 of the case member 60 has a plurality of salients 92b which have the same configuration as the salients 66b (see Fig. 12), and a plurality of through-holes (not illustrated) which have the same configuration as the through-holes 66c (see Fig. 12). Like the side wall portion 66, the side wall portion 92 is fixed to the end surface 152 (see Fig. 10) of the first holding portion 146 in the second battery unit 64 with a plurality of screws 206. Each of the screws 206 is inserted into the through-hole in the side wall portion 92 via the seal member 208.

Hereinafter, functions and advantages of the battery pack 40 will be described.

In the battery pack 40, heat generated in the batteries 98 in the first battery unit 62 is conducted to the battery holding portion 100. The heat conducted from the batteries 98 to the battery holding portion 100 is then received by the side wall portion 66 of the case 52 through the end surface 110 of the battery holding portion 100. Therefore, in the battery pack 40, heat generated in the batteries 98 in the first battery unit 62 is first conducted to the battery holding portion 100, and then conducted to the side wall portion 66 of the case 52 via the end surface 110 of the battery holding portion 100, and then released by radiation. Now, in the battery pack 40, the side wall portion 66 of the case 52 is fixed to the end surface 110 at a plurality of locations in the X direction as well as at a plurality of locations in the Y direction. In this case, it is possible to easily make the side wall portion 66 and the end surface 110 contact with each other without increasing shape formation accuracy of the case 52, while it is also possible to simultaneously increase contact between the side wall portion 66 and the end surface 110 . This increases the amount of heat which is conducted from the battery holding portion 100 to the case 52. Especially, improved contact between the side wall portion 66 and the end surface 110 helps efficient heat conduction from a center of the battery holding portion 100 where heat tends to accumulate, to the case 52.

Each of the end surface 110 and the end surface 116 of the battery holding portion 100 is across the Z direction. In other words, the end surface 110 and the end surface 116 each extend at least in the X direction and in the Y direction. In the battery pack 40, the batteries 98 in the battery holding portion 100 are arranged in not less than three (3) rows in the X direction and not less than three (3) columns in the Y direction. In this case, the battery holding portion 100 which holds the batteries 98 has increased dimensions in the X direction and in the Y direction, so the end surface 110 and the end surface 116 which extend in the X direction and the Y direction also have increased areas. This makes it possible to sufficiently increase the amount of heat which is conducted from the battery holding portion 100 to the side wall portion 66 of the case 52 via the end surface 110. Also, with the increased area of the end surface 110, it is easy to improve stiffness of the side wall portion 66 which is fixed to the end surface 110.

The side wall portion 92 of the case 52 and the battery holding portion 144 of the second battery unit 64 have the same relationship as the above-described relationship of the side wall portion 66 of the case 52 and the battery holding portion 100 of the first battery unit 62.

Generally, the case of a battery pack is designed as an assembly of two or a greater number of members for ease of manufacture of the battery pack. In the battery pack 40, the case 52 is divided into at least two case members (four case members 54, 56, 58, 60 in the present embodiment) in the Z direction, so it is not necessary to divide the case 52 in the X direction or in the Y direction. Therefore, it is not necessary to divide the side wall portion 66 of the case member 54 in the X direction or in the Y direction. In this case, the side wall portion 66 can be fixed more easily to the end surface 110 and further, the side wall portion 66 has improved heat conductivity than in arrangements where the side wall portion 66 is divided. Also, it is possible to provide more stable contact of the side wall portion 66 with the end surface 110. The same applies to the side wall portion 92 of the case member 60.

As a result of these, it is possible to manufacture the battery pack 40 easily while it is also possible to increase the amount of heat which is conducted from the batteries 98 to the case 52 via the battery holding portions 100, 144.

The side wall portion 66 of the case member 54 is fixed to the end surface 110 of the battery holding portion 100 at a plurality of locations between a plurality of conductor members 120 when viewed from the Z direction (in a view from the Z direction) . Therefore, it is possible to prevent a situation where the side wall portion 66 and the end surface 110 make mutual contact only at one location. Thus, it is possible to efficiently conduct heat from the battery holding portion 100 to the case 52. Likewise, the side wall portion 92 of the case member 60 is fixed to the end surface 152 of the battery holding portion 144 at a plurality of locations between the conductor members 164, 166, 168 when viewed from the Z direction. Therefore, it is possible to prevent cases where the side wall portion 92 and the end surface 152 make mutual contact only at one location. Thus, it is possible to efficiently conduct heat from the battery holding portion 144 to the case 52.

In the battery pack 40, the end surface 110 of the battery holding portion 100 includes the protruded surfaces 110b through 110e, and therefore it is easy to make the end surface 110 and the side wall portion 66 contact with each other in the protruded surfaces 110b through 110e. In this case, the side wall portion 66 can receive at least part of the heat, which is conducted from the batteries 98 to the battery holding portion 100, from the protruded surfaces 110b through 110e. With this arrangement, the amount of heat which is conducted from the battery holding portion 100 to the case 52 is easily increased. The same applies to the relationship between the end surface 152 of the battery holding portion 144 and the side wall portion 92 of the case member 60.

The end surface 110 of the battery holding portion 100 includes the protruded surfaces 110b through 110e as flat surfaces. In this case, it is easy to make the end surface 110 and the side wall portion 66 contact with each other in these flat protruded surfaces 110b through 110e. With this arrangement, the amount of heat which is conducted from the battery holding portion 100 to the case 52 is easily increased. The same applies to the end surface 152 of the battery holding portion 144.

The side wall portion 66 is fixed to the end surface 110 (the main surface 110g) at locations adjacent to the protruded surfaces 110b through 110e in the end surface 110. Therefore, it is easy to make the side wall portion 66 contact with the protruded surfaces 110b through 110e. The arrangement makes it possible to reliably increase the amount of heat which is conducted from the battery holding portion 100 to the case 52. Especially, in the battery pack 40, the protruded surfaces 110b through 110e are formed as flat surfaces, and therefore it is possible to make the side wall portion 66 contact with the protruded surfaces110b through 110e more reliably. Likewise, the side wall portion 92 is fixed to the end surface 152 at locations adjacent to the protruded surfaces (the limiters 172) of the end surface 152. With this arrangement, it is easy to make the side wall portion 92 contact with the protruded surfaces of the end surface 152.

In the battery pack 40, it is possible to easily and reliably fix the side wall portion 66 to the end surface 110 using the screws 206 which serve as fixing members. Likewise, it is possible to easily and reliably fix the side wall portion 92 to the end surface 152 using the screws 206.

The battery holding portion 100 is of a split design, including the first holding portion 102 and the second holding portion 104. In this case, it is possible to hold a plurality of batteries 98 in such a fashion that the batteries 98 are sandwiched by the first holding portion 102 and the second holding portion 104. This makes it possible to simplify the structure of the battery holding portion 100, making it easy to assemble the battery pack 40. The same applies to the battery holding portion 144.

In the battery pack 40, a plurality of batteries 98 are arranged in a grid pattern. In this case, it is possible to diffuse heat, which is generated in each of the batteries 98, efficiently in the battery holding portions 100, 144. Thus, it is possible to efficiently release the heat which was generated in each of the batteries 98.

In the battery pack 40, the side wall portion 66 is fixed, at the salients 66b, to the end surface 110 (the main surface 110g) of the battery holding portion 100. In this case, the side wall portion 66 is improved in its stiffness at the salients 66b. This makes it possible to prevent deformation of the side wall portion 66 which can otherwise be caused by tightening torque of the screws 206 (fixing members) for example. With this arrangement, it is possible to make the side wall portion 66 and the end surface 110 contact with each other more reliably. The same applies to the side wall portion 92.

In the embodiment described above, a plurality of batteries 98 are arranged in a grid pattern in the first battery unit 62 and in the second battery unit 64. However, the pattern in which the batteries are arranged in the battery unit is not limited to the embodiment described above. For example, the batteries may be arranged in a staggering pattern in the battery unit.

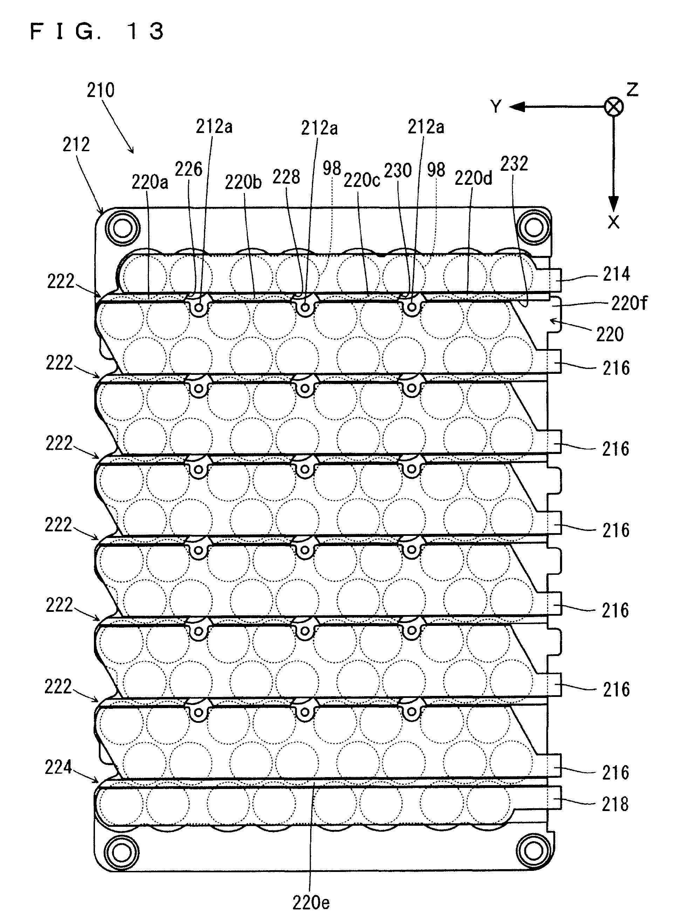

Fig. 13 shows a battery unit 210 in which a plurality of batteries 98 are arranged in a staggering pattern.

Referring to Fig. 13, the battery unit 210 includes a plurality of batteries 98 disposed in parallel to each other; and a battery holding portion 212 which holds the batteries 98. The batteries 98 are arranged in a staggering pattern in fourteen (14) rows across the X direction and in eight (8) columns across the Y direction.

A plurality of conductor members 214, 216, 218 are provided to electrically connect first end portions of the batteries 98. The present embodiment uses one conductor member 214, six conductor members 216 and one conductor member 218. Though it will not be detailed very much, a plurality (seven in the present embodiment) of conductor members (not illustrated) are used to electrically connect second end portions of the batteries 98.

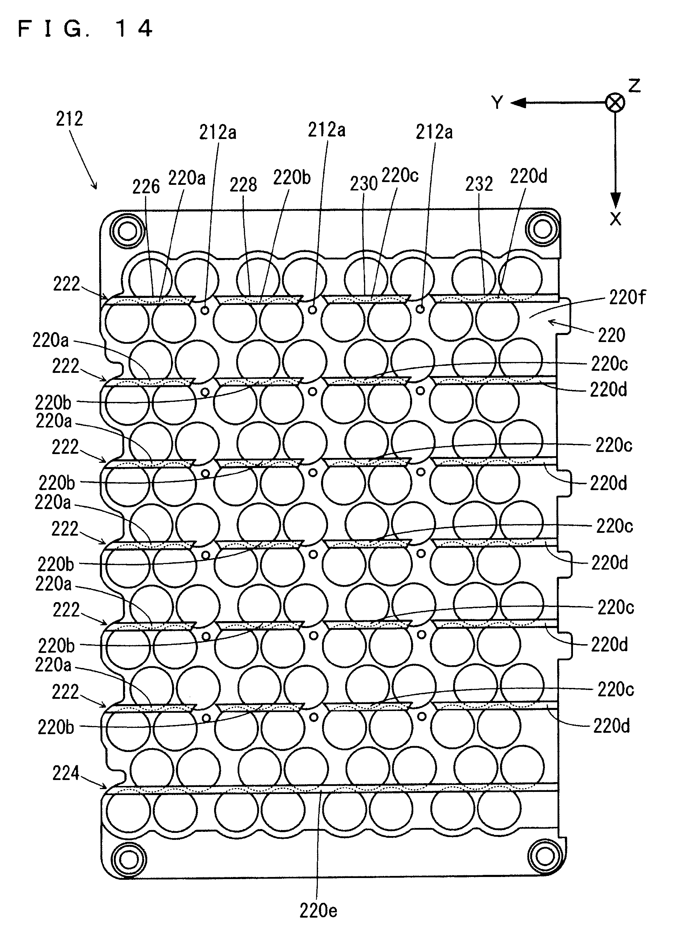

Fig. 14 shows the battery holding portion 212.

Referring to Fig. 13 and Fig. 14, the battery holding portion 212 has a first end surface 220 and a second end surface (not illustrated) each being across the Z direction. The first end surface 220 and the second end surface are spaced from each other in the Z direction. The battery holding portion 212 has a plurality of limiters 222, 224 on the first end surface 220 side. The limiters 222, 224 are spaced from each other in the X direction. The present embodiment uses six limiters 222 and one limiter 224. Though it will not be detailed very much, a plurality (eight, for example) of limiters are formed on the second end surface (not illustrated) side of the battery holding portion 212.

Referring to Fig. 13, the limiters 222, 224 are formed between respective pairs of the conductor members 214, 216, 218. Referring to Fig. 13 and Fig. 14, each of the limiters 222 includes a plurality of protrusions 226, 228, 230, 232 spaced from each other in the Y direction and arranged in-line in the Y direction.

Referring to Fig. 14, the first end surface 220 includes a plurality of protruded surfaces 220a, 220b, 220c, 220d protruding in the Z direction; a protruded surface 220e protruded in the Z direction; and a main surface 220f. Referring to Fig. 13, the protruded surface 220a is an end surface of the protrusion 226 in the Z direction; the protruded surface 220b is an end surface of the protrusion 228 in the Z direction; the protruded surface 220c is an end surface of the protrusion 230 in the Z direction; the protruded surface 220d is an end surface of the protrusion 232 in the Z direction; and the protruded surface 220e is an end surface of the limiter 224 in the Z direction. The main surface 220f is a region in the first end surface 220 excluding the protruded surfaces 220a through 220e in a view from the Z direction.

In the present embodiment, the protruded surfaces 220a through 220e and the main surface 220f are flat surfaces. The protruded surfaces 220a through 220e are at the same location in the Z direction. The protruded surface 220a has a greater dimension (width) in the Y direction than a dimension (width) of the protruded surface 220b in the X direction. Likewise, the protruded surfaces 220b through 220e each have greater dimension (width) in the Y direction than a dimension (width) of the protruded surfaces 220b through 220e in the X direction. It should be noted here that a relationship between the protruded surfaces 220a through 220e and the main surface 220f in the Z direction is the same as the relationship between the protruded surface 110a through 110f and the main surface 110g in the Z direction described earlier.

Though it will not be elaborated very much, the second end surface (not illustrated) of the battery holding portion 212 also includes a main surface and a plurality of protruded surfaces.

Referring to Fig. 13 and Fig. 14, the battery holding portion 212 has a plurality of screw holes 212a opening in the main surface 220f of the first end surface 220. The screw holes 212a are formed at a plurality of locations in the X direction as well as at a plurality of locations in the Y direction. In the present embodiment, the screw holes 212a are made at six (6) locations in the X direction and at three (3) locations in the Y direction.

Like the case 52 described earlier, the case (not illustrated) which encases the battery unit 210 is formed with a plurality of salients (not illustrated) and a plurality of through-holes (not illustrated). Specifically, the salients (not illustrated) and the through-holes (not illustrated) are formed at locations corresponding to the screw holes 212a, in the side wall portion (not illustrated) of the case. A screw (not illustrated) is inserted into each of the through-holes, and then threaded into corresponding one of the screw holes 212a. Thus, the side wall portion (not illustrated) of the case (not illustrated) is fixed to the first end surface 220 at a plurality of locations in the X direction as well as at a plurality of locations in the Y direction.

The battery pack which includes the battery unit 210 provides the same functions and advantages as offered by the battery pack 40 described above. Therefore, the arrangement provides a battery pack which is easily manufactured and has an increased conductivity of heat from the batteries 98 to the case via the battery holding portion 212. It should be noted here that a plurality of batteries 98 are arranged in a staggering pattern in the battery holding portion 212, but the battery pack is capable, like the battery holding portions 100, 144 in which the batteries 98 are arranged in a grid pattern, of efficiently diffusing heat which is generated in each of the batteries 98, in the battery holding portion 212. Thus, it is possible to efficiently release the heat which was generated in each of the batteries 98. Also, by arranging a plurality of batteries 98 in a staggering pattern, the arrangement makes it possible to reduce the size of the battery holding portion 212 (the first end surface 220) in the X direction.

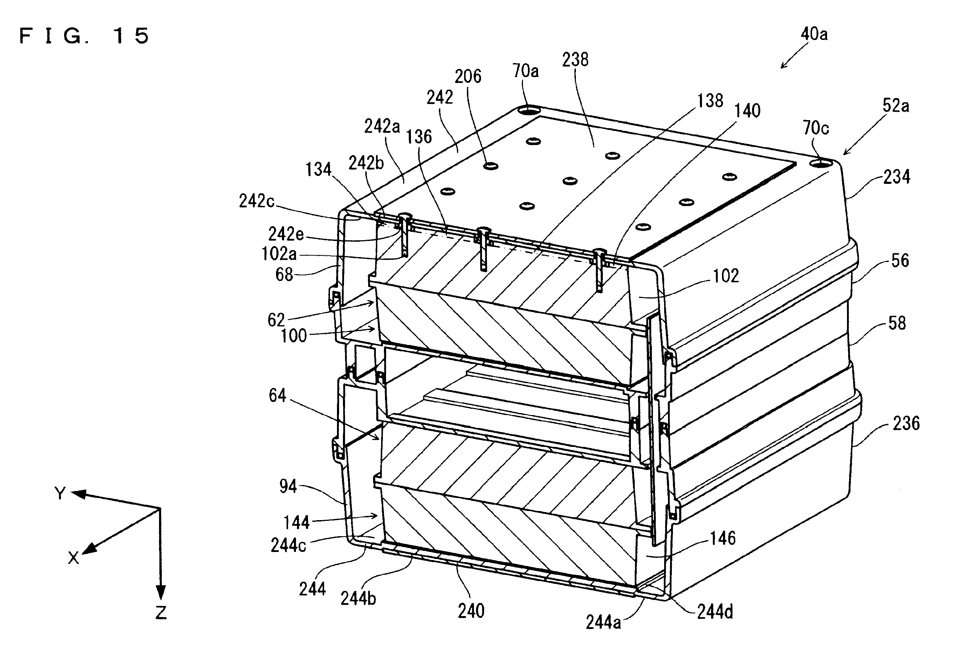

Fig. 15 is a perspective view showing another example of the battery pack.

The battery pack 40a in Fig. 15 differs from the battery pack 40 described thus far, in that it includes a case 52a in place of the case 52. The case 52a differs from the case 52 in that it has a case member 234 in place of the case member 54, has a case member 236 in place of the case member 60, and has a radiator plate 238 and a radiator plate 240. The battery pack 40a has the same configuration as the battery pack 40 except for the case members 234, 236 and the radiator plates 238, 240, so description hereafter will only be made for the case members 234, 236 and the radiator plates 238, 240, with no other description for the rest of the battery pack 40a.

The case member 234 differs from the case member 54 in that it has a side wall portion 242 in place of the side wall portion 66. The case member 234 has the same configuration as the case member 54 except for the side wall portion 242, so description hereafter will only be made for the side wall portion 242, with no other description for the case member 234. Likewise, the case member 236 differs from the case member 60 in that it has a side wall portion 244 in place of the side wall portion 92. The case member 236 has the same configuration as the case member 60 except for the side wall portion 244, so description hereafter will only be made for the side wall portion 244, with no other description for the case member 236.

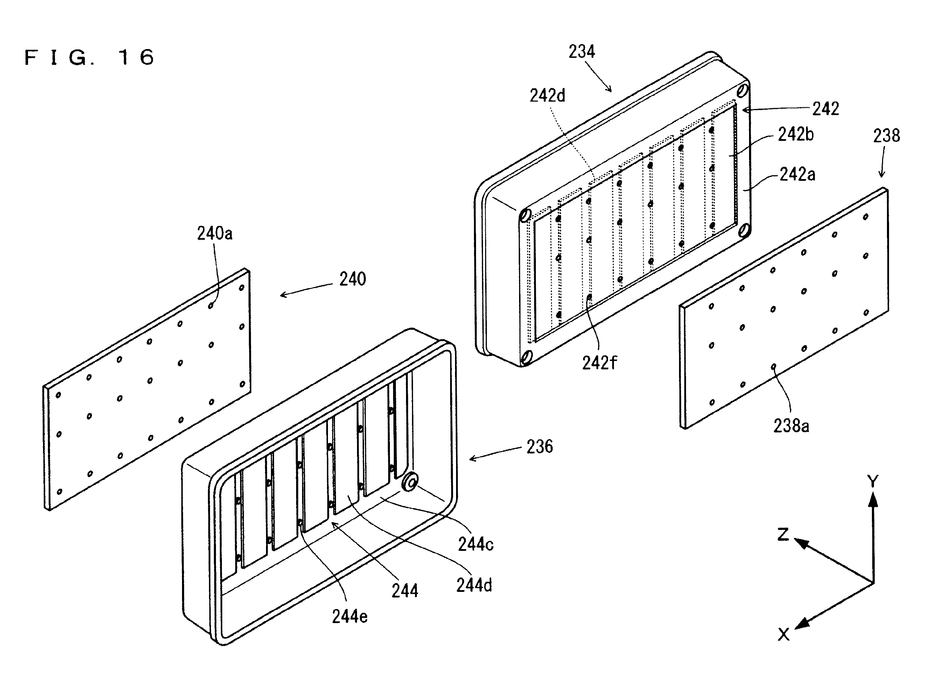

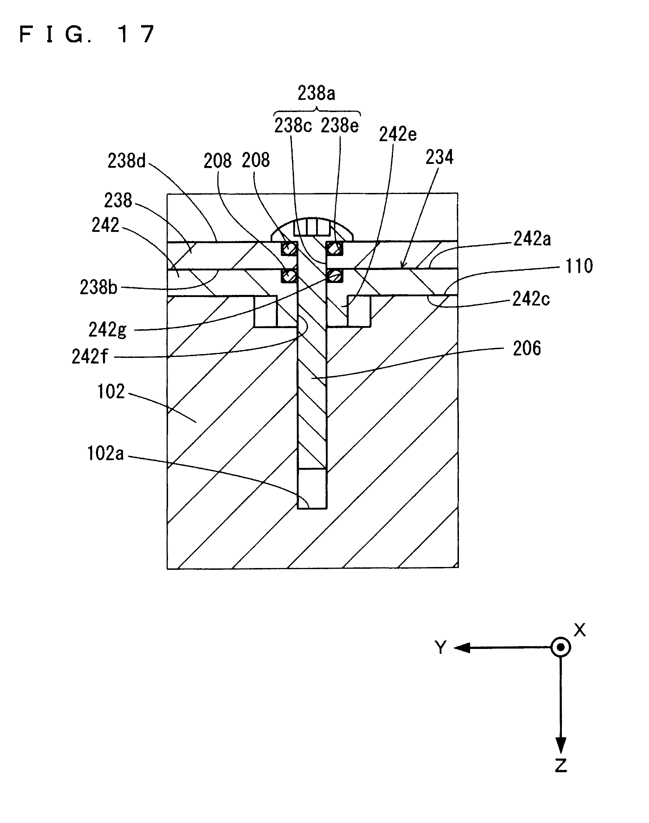

Fig. 16 is a perspective view showing the case member 234, the case member 236, the radiator plate 238 and the radiator plate 240, whereas Fig. 17 is a sectional view showing a relationship between the first holding portion 102, the side wall portion 242 of the case member 234 and the radiator plate 238.

Referring to Fig. 15 and Fig. 16, the side wall portion 242 has an outer surface 242a formed with a recess 242b which is rectangular in a view from the Z direction. Also, the side wall portion 242 has an inner surface 242c (see Fig. 15) formed with a plurality of protrusions 242d (see Fig. 16) protruding toward the first battery unit 62. The protrusions 242d are between the limiter 128 (see Fig. 6) and the adjacent limiter 130 (see Fig. 6), between the limiter 130 and the adjacent limiter 130, and between the limiter 130 and the limiter 132 (see Fig. 6), of the first holding portion 102 respectively.

Referring to Fig. 17, the side wall portion 242 has a plurality of the salients 242e which have the same configuration as the salients 66b (see Fig. 12), and a plurality of through-holes 242f which have the same configuration as the through-holes 66c (see Fig. 12). The salients 242e and the through-holes 242f are formed correspondingly to the screw holes 102a (see Fig. 8).

Referring to Fig. 15, the side wall portion 244 has an outer surface 244a formed with a recess 244b which has the same configuration as the recess 242b. Also, referring to Fig. 15 and Fig. 16, the side wall portion 244 has an inner surface 244c formed with a plurality of protrusions 244d protruding toward the second battery unit 64. The protrusions 244d are between one of the limiters 172 (see Fig. 10) and the adjacent limiter 172 of the first holding portion 146 respectively.

Referring to Fig. 16, the side wall portion 244 has a plurality of salients 244e which have the same configuration as the salients 66b (see Fig. 12), and a plurality of through-holes (not illustrated) which have the same configuration as the through-holes 66c (see Fig. 12).

The radiator plate 238 has a plurality of through-holes 238a. The through-holes 238a are formed correspondingly to the through-holes 242f of the side wall portion 242. Likewise, the radiator plate 240 has a plurality of through-holes 240a. The through-holes 240a are formed correspondingly to the through-holes (not illustrated) of the side wall portion 244. The radiator plate 238 is fitted into the recess 242b of the case member 234. Likewise, the radiator plate 240 is fitted into the recess 244b (see Fig. 15) of the case member 236. The radiator plate 238 has higher heat conductivity than the side wall portion 242. The radiator plate 240 has higher heat conductivity than the side wall portion 244. Each of the radiator plates 238, 240 includes, for example, at least one of a metal material and a resin material. The metal material used in the radiator plates 238, 240 includes, for example, at least one of aluminum, iron, stainless steel and titanium. The resin material used for the radiator plates 238, 240 includes a carbon-fiber reinforced resin for example.

Referring to Fig. 17, the through-hole 238 in the radiator plate 238 includes a small-diameter portion 238c opening in a side surface 238b on a first side (on the case member 234 side, in the present embodiment), and a large-diameter portion 238e opening in a side surface 238d on a second side and having a greater diameter than the small-diameter portion 238c. In a view from the Z direction, the small-diameter portion 238c and the large-diameter portion 238e are concentric to each other.

Referring to Fig. 15 and Fig. 17, the radiator plate 238 is fixed to the side wall portion 242 with a plurality of screws 206. More specifically, referring to Fig. 17, a seal member 208 is placed in a large-diameter portion 242g of the through-hole 242f whereas another seal member 208 is placed in the large-diameter portion 238e of the through-hole 238a, and then the screw 206 is inserted through the through-holes 238a, 242f, and threaded to the screw holes 102a. This fixes the radiator plate 238 to the side wall portion 242 of the case member 234, and the side wall portion 242 to the end surface 110 of the first holding portion 102. Though it will not be detailed very much, like the radiator plate 238, the radiator plate 240 is fixed to the side wall portion 244 of the case member 236 with a plurality of screws 206.

The battery pack 40a provides the same functions and advantages as offered by the battery pack 40 described earlier. Therefore, it is easy to manufacture the battery pack 40a and it is possible to increase the amount of heat which is conducted from the batteries 98 to the case 52a via the battery holding portions 100, 144. Also, the battery pack 40a has the radiator plates 238, 240. This arrangement makes it possible to efficiently release the heat, which is conducted from the battery holding portions 100, 144 to the case members 234, 236, from the radiator plates 238, 240. Also, in the battery pack 40a, the radiator plate 238 is fixed to the case member 234 and the battery holding portion 100 with a plurality of screws 206, whereas the radiator plate 240 is fixed to the case member 236 and the battery holding portion 144 with a plurality of screws 206. This improves contact between the battery holding portion 100, the case member 234 and the radiator plate 238, and contact between the battery holding portion 144, the case member 236 and the radiator plate 240 as well. As a result, it becomes possible to sufficiently increase the amount of heat which is conducted from the battery holding portion 100 to the radiator plate 238 via the case member 234 (the side wall portion 242) and the amount of heat which is conducted from battery holding portion 144 to the radiator plate 240 via the case member 236 (the side wall portion 244). This sufficiently improves heat releasing performance of the battery pack 40a.

A battery pack which includes the radiator plates as described above may also have the arrangement which has been described with reference to Fig. 13. Namely a plurality of batteries 98 may be arranged in a staggering pattern.

It should be noted here that insert molding may be employed to integrate the radiator plates 238, 240 in the case.

The battery packs 40, 40a may further include a heatsink. For example, referring to Fig. 4, a heatsink may be provided on the outer surface 66f of the side wall portion 66, on an outer surface of the circumferential wall portion 68, on an outer surface of the side wall portion 72, on an outer surface of the circumferential wall portion 74, on an outer surface of the side wall portion 82, on an outer surface of the circumferential wall portion 84, on an outer surface of the side wall portion 92, or on an outer surface of the circumferential wall portion 94.

Like the radiator plates 238, 240 described above, the heatsink may be fixed to the case member and battery holding portion with screws 206 for example. In this case, the arrangement improves contact between the battery holding portion, the case member and the heatsink, leading to improved heat releasing performance of the battery pack.

If the heatsink is provided on each surface of the circumferential wall portion of the case member, then, the heatsinks on all of the surfaces may be connected with each other. In this case, the arrangement reduces thermal gradient among the heatsinks, leading to improved heat releasing performance of the battery pack.

The heatsink may be replaced by a radiator plate.

The side wall portion 72 (see Fig. 5) may be fixed to the end surface 116 (see Fig. 6) of the battery holding portion 100 with a plurality of fixing members (screws 206) for example. The side wall portion 82 (see Fig. 5) may be fixed to the end surface 160 (see Fig. 10) of the battery holding portion 144 with a plurality of fixing members (screws 206), for example.

In the embodiment described above, the side wall portions 66, 92, 242, 244 are fixed to the end surfaces 110, 152 of the battery holding portions 100, 144 using fixing members provided by the screws 206. However, pins or other members may be used as the fixing members. Also, the side wall portion may be fixed to the end surface of the battery holding portion by welding (thermal, ultrasonic, etc.) for example. In this case, the number of parts in the battery pack is reduced while waterproofing performance of the battery pack is improved.

In the embodiment described above, a plurality of conductor members are formed in the X direction at a space in the battery unit. However, the conductor members may be formed in the Y direction at a space. Also, the protruded surfaces (limiters) may be formed in the Y direction, at a space in the end surface of each battery holding portion. In this case, the protruded surface (the limiter) may have a greater dimension (width) in the X direction than a dimension (width) in the Y direction.

The batteries 98 may be arranged in such a pattern that not less than two of the batteries 98 are placed in the Z direction in the battery holding portion.

A thermally conductive sheet or filler (thermally conductive adhesive) may be added between the case and the battery holding portion.

The case may have its side wall portion fixed to a plurality of conductor members of the battery unit. For example, fixing members may be used to fix the side wall portion (protrusions) to a plurality of conductor members, or welding may be employed to fix the side wall portion (protrusions) to a plurality of conductor members.

In the embodiment described above, the first end surface of the battery holding portion has its longitudinal direction parallel to the X direction while the lateral direction of the first end surface of the battery holding portion is parallel to the Y direction. However, the lateral direction of the first end surface of the battery holding portion may be parallel to the X direction while the longitudinal direction of the first end surface of the battery holding portion may be parallel to the Y direction.

In the embodiment described above, a plurality of protrusions protruding toward the battery holding portion are formed in a side wall portion of the case. However, for example, the side wall portion may be shaped so that only the portions which correspond to the limiters in the battery holding portion protrude toward the outside of the case.

In the embodiment described above, description was made for a case that the circumferential wall portion protrudes in the Z direction from the outer circumferential edge of the side wall portion. However, position of the circumferential wall portion is not limited by the embodiment described above. For example, the circumferential wall portion may protrude in the Z direction, from a slightly inner region than the outer circumferential edge of the side wall portion. Specifically, there may be an arrangement where the circumferential wall portion protrudes in the Z direction, from an outer circumferential edge portion of the side wall portion. It should be noted here that the outer circumferential edge portion of the side wall portion includes the outer circumferential edge of the side wall portion.

In the embodiment described above, description was made for cases where one case member and another case member are fitted to each other with a seal member sandwiched therebetween. However, the method of fitting the two case members is not limited by the embodiment described above. For example, an adhesive or double-sided adhesive tape may be used in place of the seal member when fitting the case members with each other. For another example, the case members may be welded to each other.

In the embodiment described above, description was made for cases where the first side wall portion is fixed to the first end surface at a plurality of locations between mutually adjacent conductor members in a view from the third direction (Z direction). However, the arrangement for fixing the first side wall portion is not limited by the embodiment described above. Different arrangement may be employed to fix the first side wall portion to the first end surface as far as the first side wall portion is fixed to the first end surface at a plurality of locations in the first direction (X direction) and at a plurality of locations in the second direction (Y direction). As far as this condition is satisfied, the first side wall portion may be fixed to the first end surface, for example, at least one location between a pair of mutually adjacent conductor members and at least one location between another pair of mutually adjacent conductor members when viewed from the third direction. Such an arrangement is also covered by the statement "the first side wall portion is fixed to the first end surface at a plurality of locations between the conductor members in a view from the third direction". It should be noted here that the above-mentioned "a pair of mutually adjacent conductor members" and the above-mentioned "another pair of mutually adjacent conductor members" may be provided by four conductor members, or three conductor members. In the case where the above-mentioned "a pair of mutually adjacent conductor members" and the above-mentioned "another pair of mutually adjacent conductor members" are provided by three conductor members, one of the conductor members in the above-mentioned "pair of mutually adjacent conductor members" and one of the conductor members in the above-mentioned "another pair of mutually adjacent conductor members" are provided by one common conductor member.

The saddle type vehicle to which the present invention is applicable is not limited to the scooter 10. Specifically, the present invention is applicable to other kinds of saddle type vehicles including other types of motorcycles such as mopeds; all-terrain vehicles; snowmobiles; and others.

The present invention being thus far described in terms of preferred embodiments, it is obvious that these may be varied in many ways within the scope of the present invention. The scope of the present invention is only limited by the accompanying claims.

### LEGEND

- 10: Scooter
- 40, 40a: Battery packs
- 52, 52a: Cases
- 54, 56, 58, 60, 234, 236: Case members
- 62: First battery unit
- 64: Second battery unit
- 66, 72, 82, 92, 242, 244: Side wall portions
- 98: Battery
- 100, 144, 212: Battery holding portions
- 102, 146: First holding portions
- 104, 148: Second holding portions
- 110, 116, 152, 160: End surfaces
- 110a, 110b, 110c, 110d, 110e, 110f, 116a: Protruded surfaces
- 120, 122, 124, 126, 164, 166, 168,:
- 170, 182, 184, 188, 214, 216, 218: Conductor members
- 206: Screw
- 220: First end surface

## Claims

1. A battery pack comprising: a plurality of rechargeable batteries arranged in a plurality of rows across a first direction and in a plurality of columns across a second direction perpendicular to the first direction;
a battery holding portion holding the batteries and having a first end surface and a second end surface spaced from each other in a third direction perpendicular to both the first direction and the second direction;
a plurality of conductor members electrically connecting the batteries; and
a case encasing the batteries, the battery holding portion and the conductor members;
wherein the batteries are arranged in not less than three rows across the first direction and not less than three columns across the second direction;
the case is divided into at least a first case member and a second case member in the third direction;
each of the first end surface and the second end surface is across the third direction;
the first case member has a first side wall portion opposing to the first end surface;
the second case member has a second side wall portion opposing to the second end surface; and
the first side wall portion is fixed to the first end surface at a plurality of locations in the first direction and at a plurality of locations in the second direction for receiving heat, which is generated in the batteries and conducted from the batteries to the battery holding portion, from the first end surface.

2. The battery pack according to Claim 1, wherein the first side wall portion has at least one protrusion protruding toward the battery holding portion, and the protrusion is preferably rectangular when viewed from the third direction.

3. The battery pack according to Claim 1 or 2, wherein the conductor members are between the first end surface of the battery holding portion and the first side wall portion of the first case member, and
the first side wall portion is fixed to the first end surface at a plurality of locations between the conductor members in a view from the third direction.

4. The battery pack according to one of Claims 1 through 3, wherein the first end surface of the battery holding portion includes a protruded surface located on the first side wall portion side with respect to the conductor members and between the conductor members in a view from the third direction, and
the first side wall portion is fixed to the first end surface for receiving at least part of heat, which is conducted from the batteries to the battery holding portion, from the protruded surface of the first end surface.

5. The battery pack according to Claim 4, wherein the first side wall portion is fixed to the first end surface at a location adjacent to the protruded surface, within the first end surface.

6. The battery pack according to one of Claims 1 through 5, wherein the first end surface of the battery holding portion includes a flat surface between the conductor members in a view from the third direction,
the flat surface has a greater or a smaller width in the first direction than that of the flat surface in the second direction; and
the first side wall portion receives at least part of heat, which is conducted from the batteries to the battery holding portion, from the flat surface of the first end surface.

7. The battery pack according to Claim 6, wherein the first side wall portion is fixed to the first end surface at a location adjacent to the flat surface within the first end surface.

8. The battery pack according to Claim 6 or 7, wherein the first side wall portion of the case is fixed to the first end surface of the battery holding portion by a plurality of fixing members.

9. The battery pack according to Claim 6 or 7, wherein the first side wall portion of the case is fixed to the first end surface of the battery holding portion by welding.

10. The battery pack according to one of Claims 1 through 9, wherein the battery holding portion is divided into at least a first holding portion and a second holding portion in the third direction, the first holding portion has the first end surface, and the second holding portion has the second end surface.

11. The battery pack according to one of Claims 1 through 10, wherein the batteries are arranged in a grid pattern.

12. The battery pack according to one of Claims 1 through 10, wherein the batteries are arranged in a staggering pattern.

13. A saddle type vehicle comprising the battery pack according to one of Claims 1 through 12.
